# EUROPEAN PATENT SPECIFICATION

(11) **EP 3 539 526 B1**
(45) Date of publication and mention of the grant of the patent: **10.11.2021**
(21) Application number: 19159508.1
(22) Date of filing: 26.02.2019
(51) Int. Cl.: A61H 1/02, A61H 3/00, A61H 3/04

(54) **WEARABLE ASSISTIVE DEVICE PERFORMING PROTECTION OPERATION FOR DRIVE SYSTEM**
ASSISTIERENDE WEARABLE-VORRICHTUNG ZUR BEREITSTELLUNG VON SCHUTZBETRIEB FÜR EIN ANTRIEBSSYSTEM
DISPOSITIF D'ASSISTANCE PORTABLE EFFECTUANT UNE OPÉRATION DE PROTECTION POUR UN SYSTÈME D'ENTRAÎNEMENT

(30) Priority: 15.03.2018 KR 20180030469; 12.06.2018 KR 20180067661; 12.09.2018 US 201862730399 P; 12.09.2018 US 201862730400 P; 12.09.2018 US 201862730412 P; 12.09.2018 US 201862730420 P
(43) Date of publication of application: 18.09.2019
(73) Proprietor: LG Electronics Inc., Seoul 07336 (KR)
(72) Inventor: NAM, Bohyun, 08592 Seoul (KR); PARK, Kyu Tae, 08592 Seoul (KR); SON, Jung Kyu, 08592 Seoul (KR); YU, Seonil, 08592 Seoul (KR); LEE, Wonjun, 08592 Seoul (KR)
(74) Representative: Vossius & Partner Patentanwälte Rechtsanwälte mbB

(56) References cited:
- EP-A1- 3 207 909
- KR-B1- 100 716 597
- KR-B1- 101 788 567

## Description

### BACKGROUND

### 1. Field

This application relates to assistive and/or rehabilitative technology.

### 2. Background

In assistive and/or rehabilitative technology, an assistive device such as a wearable robot or robotic exoskeleton may assist or augment a movement of a user. One type of a wearable device may be a wearable robot or, more specifically, an exoskeleton. The exoskeleton may be donned on a part of the body and may have a multi-joint skeletal structure to move with a joint movement of the user, and the exoskeleton may further provide an assistive force to the user. Generally, the exoskeleton may have a motor or driving means to generate the assistive force.

The multi-joint structure and frame of the exoskeleton may be made of a metal material, and so the exoskeleton may weigh tens of kilograms or more. For a user to wear such a heavy exoskeleton, an assistant to the user may have to carry or transfer the exoskeleton to the user by using a separate transportation device to carry and deliver the exoskeleton to the user. When there is no separate transportation device, multiple people may have to carry the exoskeleton. In addition, if the assistant carries an exoskeleton by herself, she may be injured due to the heavy weight of the exoskeleton.

Referring to Korean Patent No. 10-1433284 (FIGS. 1 and 2) and US Patent Application No. 9,314,393 (FIGS. 3 and 4), a conventional walking assisting apparatus that helps a user to walk may be used. A conventional walking assisting apparatus will be described with reference to the above.

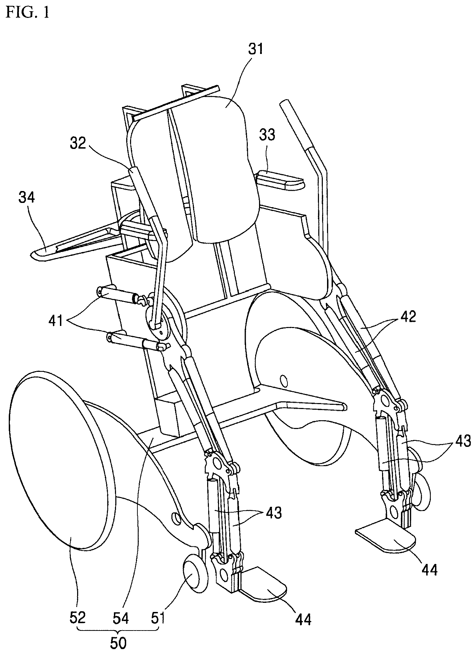

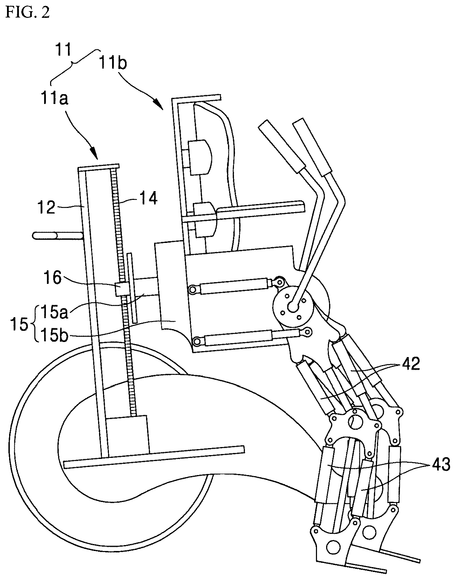

FIGS. 1 and 2 are views showing a conventional walking assisting apparatus in Korean Patent No. 10-1433284. Referring to FIGS. 1 and 2, the walking assisting apparatus may include a frame 11, walking assistive units or shafts 41, 42, 43, 44, and a wheel 50.

The frame 11 may move the walking assistive shafts 41, 42, 43, and 44 on the wheel 50 upward and downward. The legs of the user may be set with the walking assistive shafts 41, 42, 43, and 44. The wheel 50 may move the walking assistive shafts 41, 42, 43, and 44 forward, rearward, leftward, and rightward.

The height of the walking assistive shafts 41, 42, 43, 44 may be adjusted to accommodate the user, and may be adjusted while the user wears the walking assisting apparatus. The height of the walking assistive shafts 41, 42, 43, and 44 may be changed by manually operating the frame 11. In a process of adjusting the frame 11 upward and downward, the walking assistive shafts 41, 42, 43, and 44 may collide with the ground. When a collision between the walking assistive shafts 41, 42, 43, and 44 and the ground is repeated, a durability of a drive system and a joint portion of the walking assistive shafts 41, 42, 43, and 44 may be reduced.

Further, the walking assisting apparatus may be difficult to put on, especially since a typical user may be weak. Thus, in preparing to wear the walking assisting apparatus, the user may need help from a number of assistants.

When the user wears the walking assisting apparatus in a sitting state by using a separate chair, the walking assisting apparatus may require a manual process of setting a posture of the walking assisting apparatus such that it corresponds to a shape or position of a chair. Setting a posture or placement of the walking assisting apparatus may be difficult and may require a number of assistants to help.

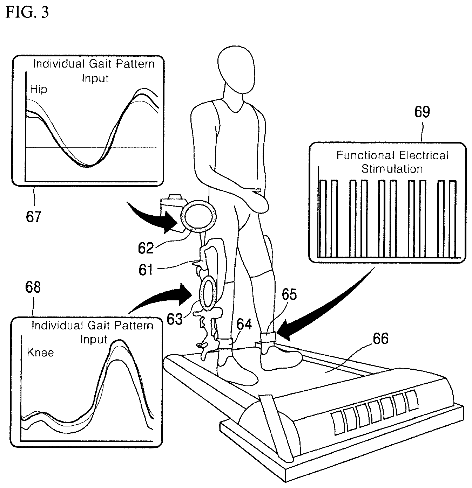

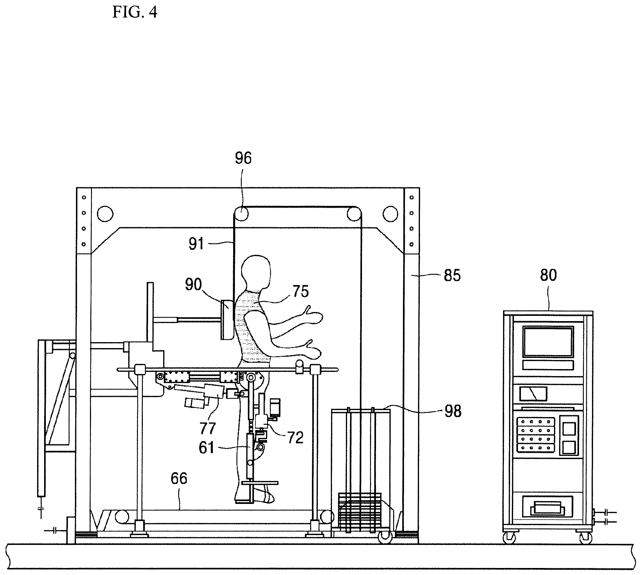

FIGS. 3 and 4 are views showing another conventional walking assisting apparatus in US Patent Application No. 9,314,393. Referring to FIGS. 3 and 4, the conventional walking assisting apparatus may include a hip joint 62, a knee joint 63, an ankle strap 64, and a controller 80. The user may practice walking on a treadmill 66 in a state in which the user wears the walking assisting apparatus.

Based on a change of an angle measured in a tilt sensor, the controller 80 may control an operation of the hip joint 62 and the knee joint 63. A load applied to the hip joint 62 and the knee joint 63 may be transmitted to the controller 80. The controller 80 may adjust a weight by using the transmitted load. Then, the controller 80 may adjust a tension of the rope 91 connected to a harness 75 of the user. By adjusting the weight, the controller 80 may assist the user with walking.

However, in a process of moving and donning the walking assistant apparatus, the walking assisting apparatus may collide with the ground. When collisions with the ground are frequent, the durability of each joint 62 and 63 and a drive system 72 to control each joint 62 and 63 may be reduced, which may increase a failure or damage rate of the walking assisting apparatus.

Since it may be difficult for the user to wear the walking assisting apparatus in a standing state, an assistant may have to help the user to wear the walking assisting apparatus in a sitting posture. The assistant may have to manually change the posture of the conventional walking assisting apparatus. The drive system of the walking assisting apparatus may be damaged by an external force applied in a process of changing the posture of the walking assisting apparatus.

Further, in order to relieve the load applied to each joint 62 and 63, the walking assisting apparatus may provide an assistive force in an upward direction and a downward direction to the walking assisting apparatus by using the rope 91. However, if the height of the walking assisting apparatus is changed by the rope 91, impacts between the walking assisting apparatus and the ground may frequently occur. The walking assisting apparatus may not have a control method which prevents such an impact. Therefore, the drive system of the walking assisting apparatus may be easily damaged by a frequent occurrence of impact.

EP 3 207 909 A1 relates to a supporting structure comprising two pairs of legs and four wheels each arranged at a lower end of a respective one of the legs. Each leg comprises an upper segment and a lower segment, and optionally a retractable leg extension segment for contacting the ground instead of the corresponding wheel.

### BRIEF DESCRIPTION OF THE DRAWINGS

The embodiments will be described in detail with reference to the following drawings in which like reference numerals refer to like elements wherein:
FIGS. 1 and 2 are views illustrating a conventional walking assisting apparatus;
FIGS. 3 and 4 are views illustrating another conventional walking assisting apparatus;

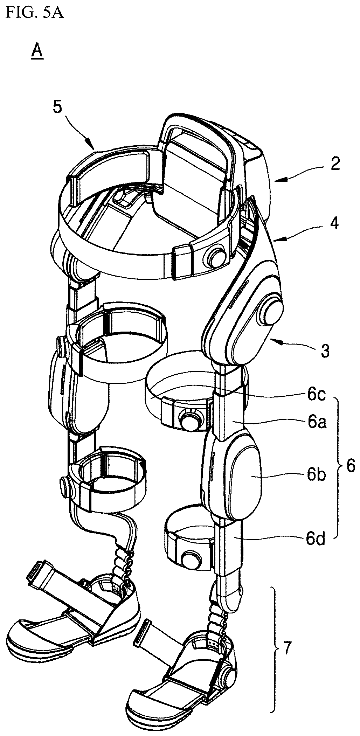

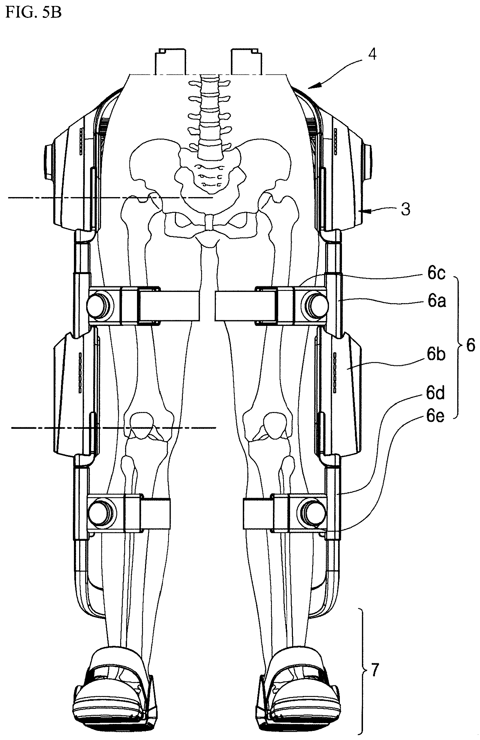

FIGs. 5A and 5B are views showing an exoskeleton in accordance with an exemplary embodiment;

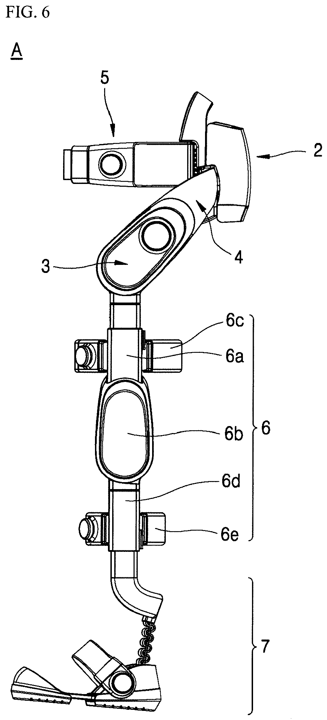

FIG. 6 is a side view of an exoskeleton according to FIG. 5;

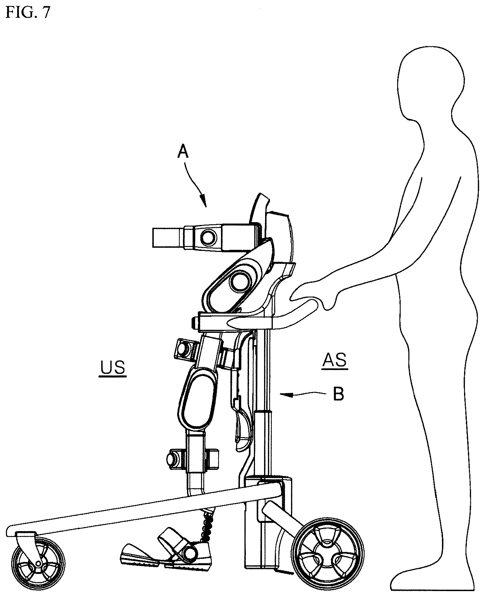

FIG. 7 is a view showing 'a moving mode' of an assistive and/or rehabilitative device in accordance with an exemplary embodiment;

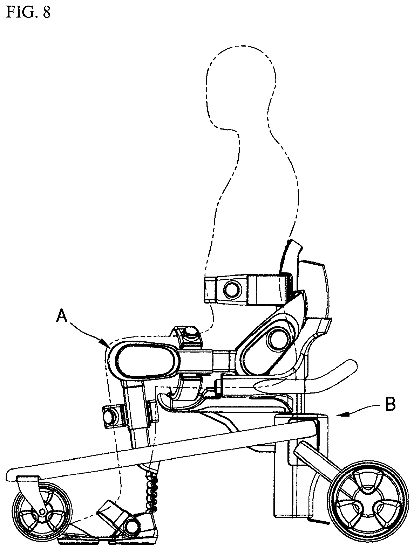

FIG. 8 is a view showing 'a wearing mode' of an assistive and/or rehabilitative device in accordance with an exemplary embodiment;

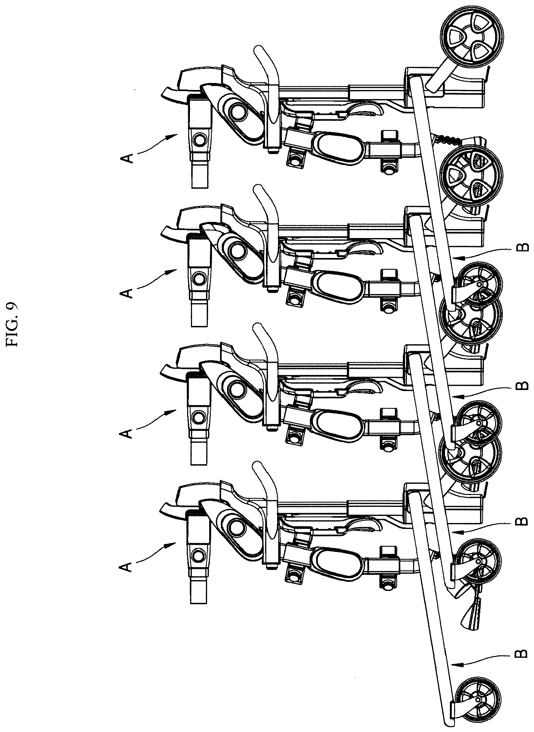

FIG. 9 is a view showing 'a storage mode' of an assistive and/or rehabilitative device in accordance with an exemplary embodiment;

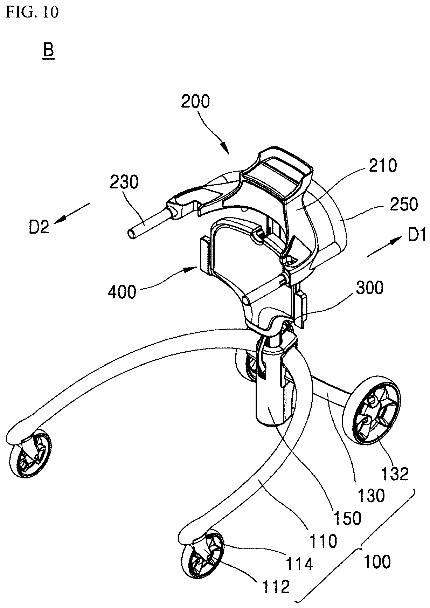

FIG. 10 is a perspective view of an assistive and/or rehabilitative device in accordance with an exemplary embodiment;

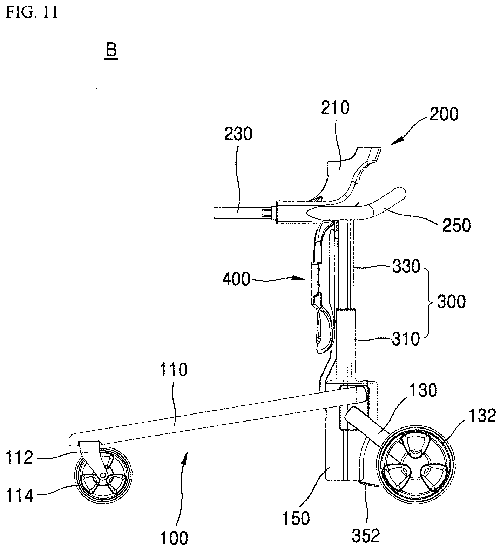

FIG. 11 is a side view of an assistive and/or rehabilitative device of FIG. 10;

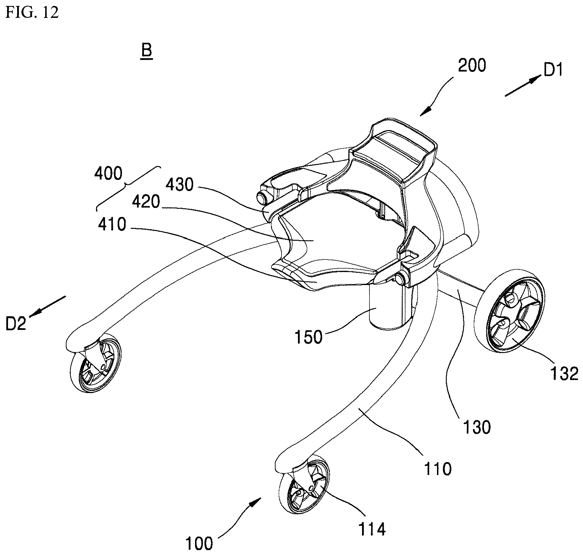

FIG. 12 is a perspective view of a chair use state or chair state of an assistive and/or rehabilitative device in accordance with an exemplary embodiment;

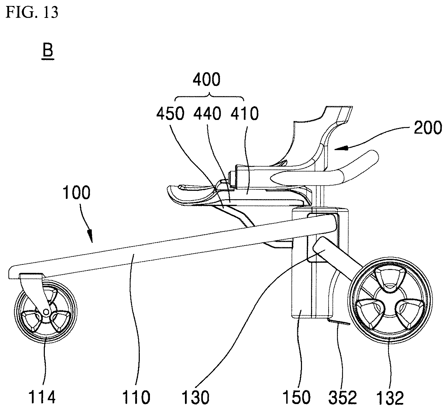

FIG. 13 is a side view of the an assistive and/or rehabilitative device of FIG. 12;

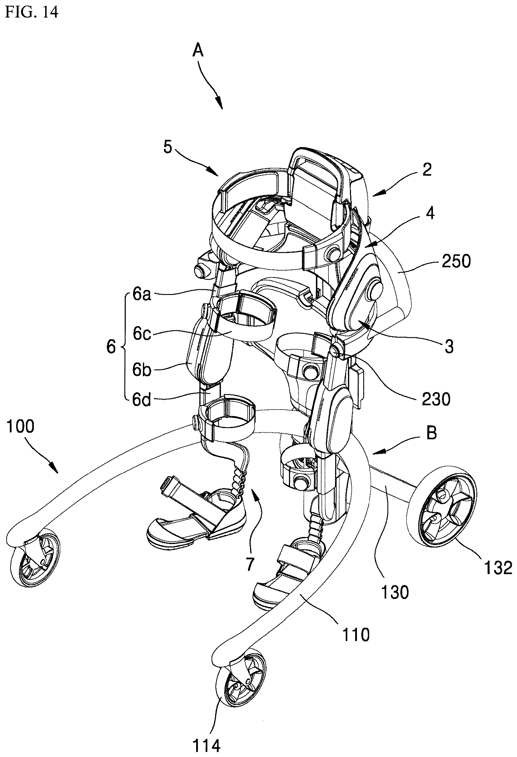

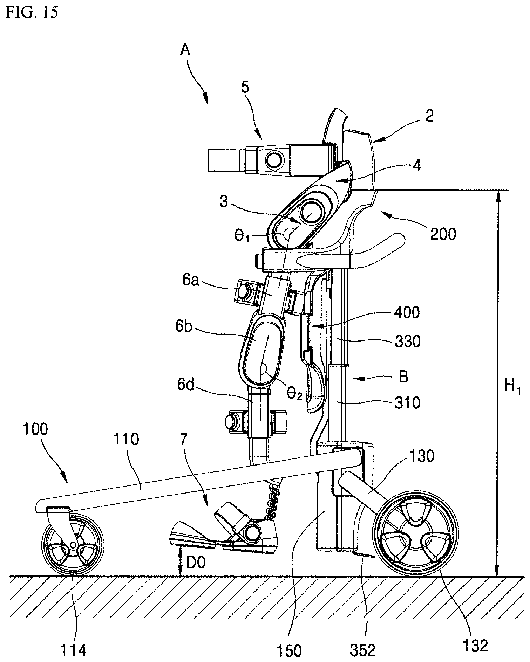

FIGS. 14 and 15 are views showing a state in which an exoskeleton is supported on an assistive and/or rehabilitative device in accordance with an exemplary embodiment;

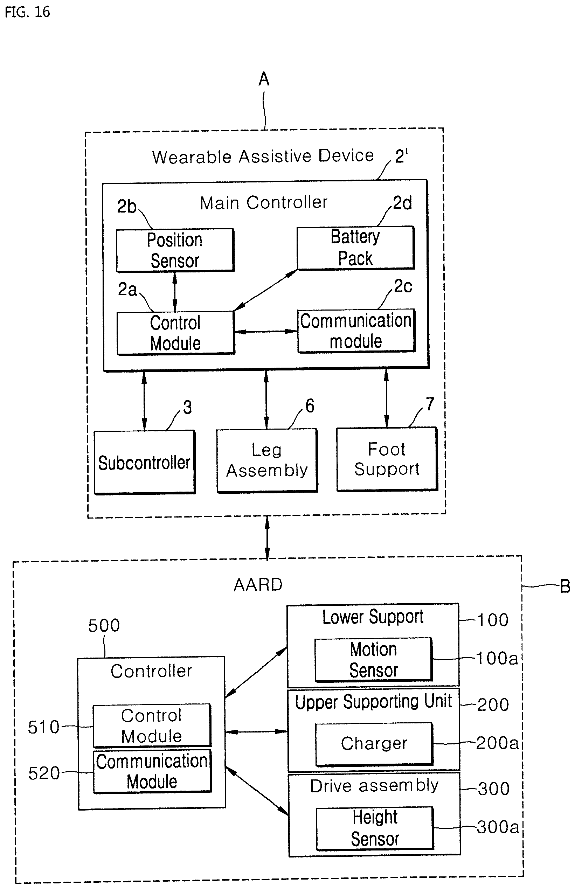

FIG. 16 is a block diagram showing a mutual relationship between an exoskeleton and an assistive and/or rehabilitative device in accordance with an exemplary embodiment;

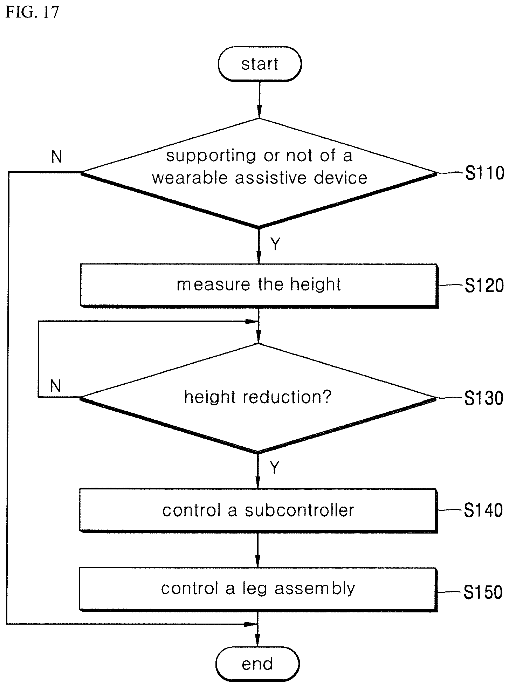

FIG. 17 is a flow chart showing a method of controlling an exoskeleton in accordance with an exemplary embodiment;

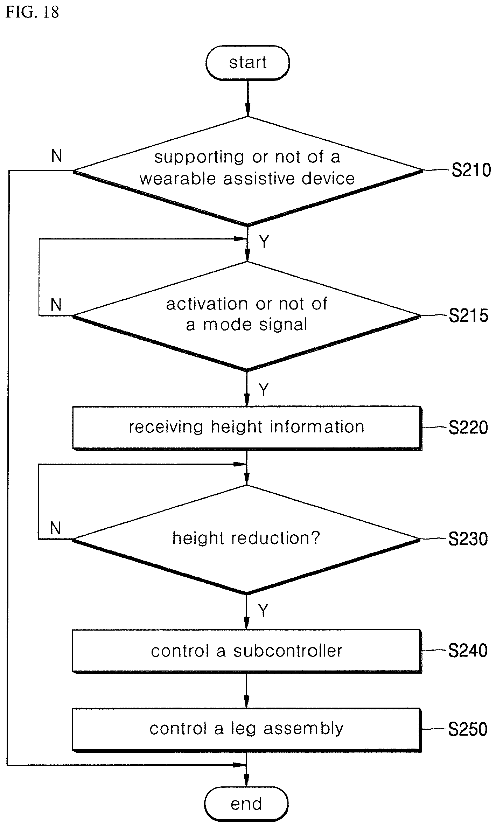

FIG. 18 is a flow chart showing a method of controlling an exoskeleton in accordance with an exemplary embodiment;

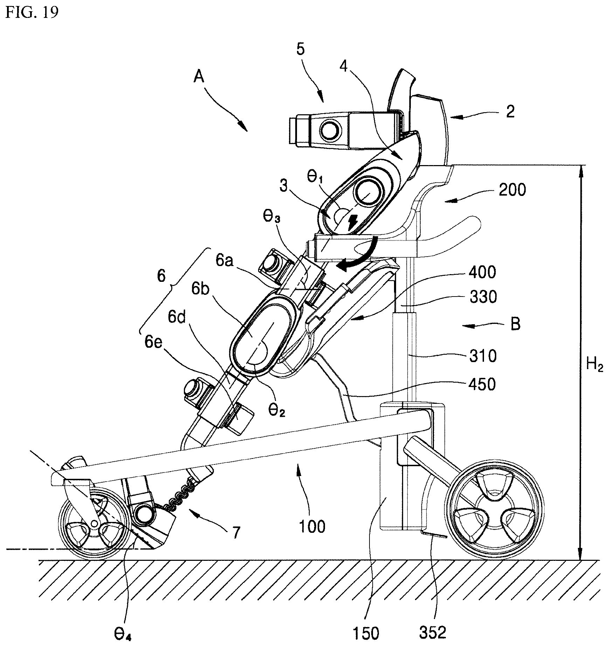

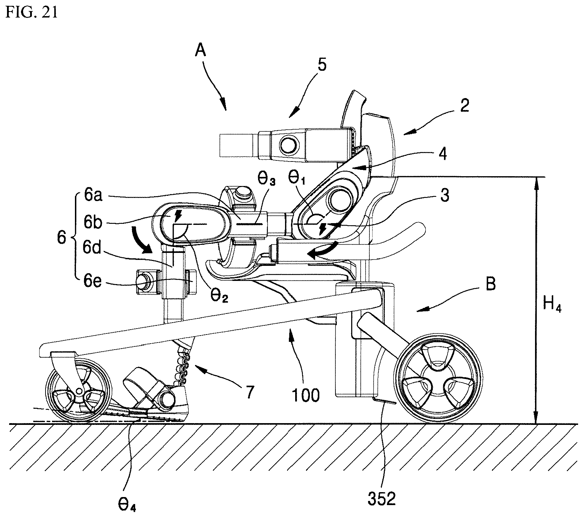

FIGS. 19 and 21 are side views illustrating an operation of an exoskeleton supported on an assistive and/or rehabilitative device in accordance with an exemplary embodiment;

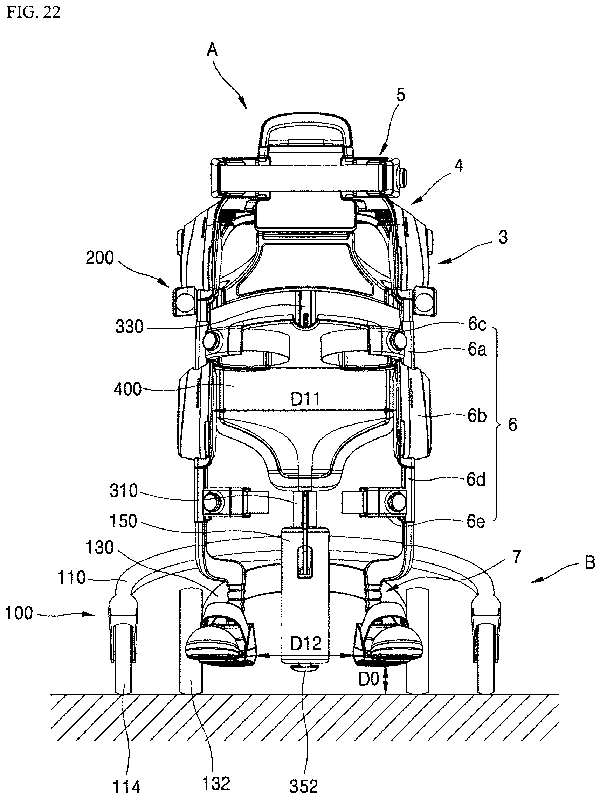

FIG. 22 is a front view showing an exoskeleton supported on an assistive and/or rehabilitative device in 'a moving mode'.

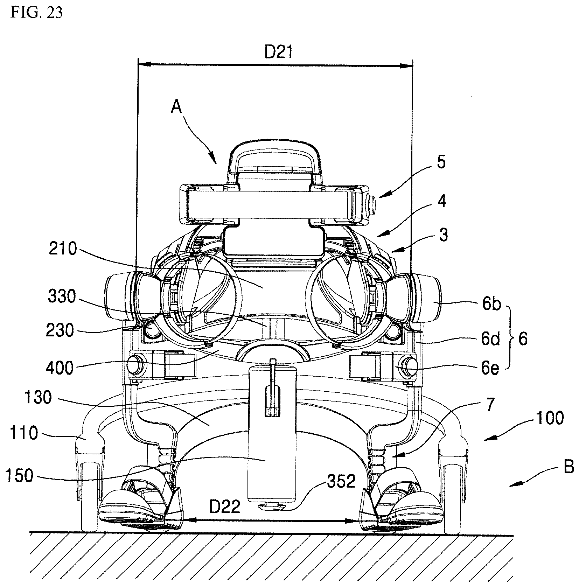

FIG. 23 a front view showing an exoskeleton supported on an assistive and/or rehabilitative device in 'a wearing mode'.

### DETAILED DESCRIPTION

The present invention is directed to a assistive rehabilitation system, ARS, comprising a wearable assistive device and an adaptive assistive and/or rehabilitation device, AARD according to claim 1. Subsidiary aspects of the invention are provided in the dependent claims.

In this specification, 'a user' means a person who may wear a wearable assistive device or an exoskeleton. Further, 'an assistant' means a person who may help the user in wearing the exoskeleton, or who may help in transporting the exoskeleton to and from the user.

In the present specification, 'assistive force' means an external force additionally provided to compliment a user's natural motion or strength. The assistive force' may be provided in a specific direction from the exoskeleton and may be provided with an electric motor, a hydraulic pump, or an actuator (hydraulic, electric, or pneumatic). The assistive force may be a rotational force that moves the exoskeleton at its joints to correspond with a natural movement of the user.

Referring to FIGS. 5 and 6, when a user wears a wearable assistive device such as a wearable robot e.g., exoskeleton A, on a lower body and participates in a rehabilitation training such as walking, the exoskeleton A may assist a lower body power or strength of the user. The exoskeleton A may include a lumbar/back frame 2, a main control unit or main controller 2', housed in the lumber/back for an actuated hip joint 3, a sub control unit or subcontroller 3' housed near the actuated hip joint 3, a main frame unit or main frame 4, a waist/pelvic frame 5, a leg or leg assembly 6, and a foot assembly or foot support 7.

When the user wears the exoskeleton A, the lumbar/back frame 2 may be provided at a rear of the user. The main controller 2' may adjust the width of the main frame 4 to correspond to a body size of the user. The lumbar/back frame 2 may also house a battery pack therein.

The waist/pelvic frame 5 may be coupled to the lumbar/back frame 2. In order to support a waist of the user, the waist/pelvic frame 5 may be worn on the waist or a pelvis of the user. The waist/pelvic frame 5 may include belt, or strap which may be adjustable in length via a dial or knob. The belt may fix the waist of the user to the exoskeleton A.

The lumbar/back frame 2 may be coupled to the main frame 4. The main frame 4 may have a form that covers one or a first, e.g., left side of a pelvis of the user to or a second, e.g., right side thereof. The main frame 4 may be formed of an approximately 'U'-shape or may be shaped to fit the user. The main frame 4 may include a first end and a second end that extend downward along the hips or pelvis, e.g., ilium, of the user.

The actuated hip joint 3 may be arranged on first and second sides of the main frame 4. The subcontroller 3' may be provided on or at the actuated hip joint 3 and may generate a first assistive force. The first assistive force may be a force that assists a hip joint power or strength of the user. The actuated hip joint 3 may include a rotary dial that controls the subcontroller 3'. The user may adjust the size of the first assistive force via the rotary dial. A driving means, e.g., a motor or actuator, that may provide the first assistive force may be provided in the actuated hip joint 3. At least one leg or leg assembly 6 may be coupled to a lower end of the actuated hip joint 3. The actuator may be a hydraulic actuator, a pneumatic actuator, or an electrical actuator.

There may be a pair of legs 6, which may be worn on both legs of the user, respectively. Each leg 6 may include an upper leg frame 6a, an actuated joint 6b, a lower leg frame 6d, and at least one leg belt or leg strap 6c and/or 6e.

The upper leg frame 6a may be connected to the main frame 4. The upper leg frame 6a may support a thigh of the user, while the lower leg frame 6d may support a calf. A first end of the upper leg frame 6a may be connected to the main frame 4, and a second end of the upper leg frame 6a may be connected to the lower leg frame 6d. An angle between the upper leg frame 6a and the main frame 4 Θ1 (Figures 18-19) may be adjusted via the actuated hip joint 3 and/or the subcontroller 3'. Θ1 may also be referred to as a hip joint angle.

The upper leg frame 6a may also be extended outward, e.g., toward a left or right side by a hip joint structure (not shown) of the main frame 4. The user wearing the exoskeleton A may therefore extend his or her legs out to a right side or left side from a midline of his or her body.

The actuated joint 6b may provide a second assistive force. The second assistive force may be a force that assists a strength or movement of the user at the knee. The actuated joint 6b may include a driving means such as a motor or actuator (e.g., hydraulic, electric, or pneumatic).

The actuated joint 6b may be arranged between the upper leg frame 6a and the lower leg frame 6d. Based on the actuated joint 6b, the upper leg frame 6a and the lower leg frame 6d may move to correspond to a natural movement of a knee joint of the user. The actuated joint 6b may adjust an angle Θ2 between the upper leg frame 6a and the lower leg frame 6d (Figures 18 and 19). Θ2 may also be referred to as a knee joint angle.

Leg belts 6c and 6e may be arranged on the upper leg frame 6a and the lower leg frame 6d, respectively. The leg belt 6c may secure a thigh of the user to the upper leg frame 6a, while the leg belt 6e may secure a calf of the user to the lower leg frame 6d. The leg belts 6c and 6e may each include a belt. The length of the belt may be adjusted via a dial or knob.

The foot support 7 may be coupled to a lower end of the lower leg frame 6d. The foot support 7 may secure or be worn on a barefoot of the user or a shoe of the user. Hereinafter, for convenience of description, an example where the shoes or feet of the user may be secured to the foot support 7 will be described. The foot support 7 may be formed in a shape corresponding to that of the shoes of the user. The length of the foot support 7 may be adjusted.

The foot support 7 may include at least one pressure sensor (not shown). Data measured in the pressure sensor may be transmitted to the main controller 2'. Based on received data, the main controller 2' may determine whether the foot support 7 is in contact with a floor surface or a ground. Based on that determination, the main controller 2' may control an operation of the subcontroller 3' and the leg 6. A detailed description thereof will be described later with reference to FIG. 16.

Hereinafter, each operation mode of an adaptive assistive and/or rehabilitative device (AARD) B will be described. FIG. 7 shows 'a moving mode' of an exoskeleton support in accordance with an exemplary embodiment. FIG. 8 shows 'a wearing mode' or 'donning mode' of an exoskeleton support in accordance with an exemplary embodiment. FIG. 9 shows 'a storage mode' of an exoskeleton support in accordance with an exemplary embodiment.

Referring to FIG. 7, an exoskeleton A may be supported on an adaptive assistive and/or rehabilitative device (AARD) B, and the AARD B may have or be in a moveable state, or a 'moving mode'. When the AARD B is in a moving mode, the AARD B may be used as a walker to support the user during walking, or may be used to transport the exoskeleton A. The AARD B and the exoskeleton A may comprise an assistive rehabilitation system (ARS). The ARS may be in a walker state or transport state when the AARD B is in the moving mode. When the exoskeleton A is supported on the AARD B while the AARD B is in the moving mode, then the ARS may be in a transport state.

In the moving mode, wheels 114 and 132 of the AARD B may spin or turn, or may not be stopped by a brake. Further, in 'the moving mode', the height of the AARD B or a height of the main controller 2' may be kept higher than a predetermined AARD reference height.

The exoskeleton A may be supported on the AARD B in an upright state in a transport state of the ARS when the AARD B is in moving mode. The exoskeleton A, primarily at the foot support 7, may be maintained in a state spaced apart from the ground so as not to drag on the ground. Such a configuration may prevent damage to the foot support 7 during transportation.

The exoskeleton A may be supported on a user side (US in FIG. 7) of the AARD B, and an assistant to the user may move the AARD B while holding a transport handle provided on an assistant side (AS in FIG. 7) of the AARD B. The assistant may move the exoskeleton A, which may weigh up to tens of kilograms, by applying a small force to the AARD B at the transport handle. A walker handle may be provided on the user side of the AARD B for the user to use during walking. Referring to FIG. 8, an AARD B may serve as a chair so that the user may put on and don the exoskeleton A in a chair state of the ARS. Hereinafter, a state in which the AARD B may be a chair may be defined as 'a wearing mode' or a 'donning mode'. In the wearing mode, the AARD B may maintain a stopped state. Further, in the wearing mode, the height of the AARD B may be kept lower than a predetermined AARD reference height.

When an operation mode of the AARD B is switched from the moving mode to the wearing mode, a seat or chair assembly 400 of the AARD B may be switched from a standing state to a seated or chair state. In a process of switching from 'the moving mode' to the 'wearing mode', the height of the AARD B may be lowered.

However, when the height of the AARD B is lowered, a part of the exoskeleton A (for example, the foot support 7) may collide with the ground. When an impact is applied to the exoskeleton A due to such a collision, a driving means, such as in the actuated hip joint 3 or the actuated joint 6b, of the exoskeleton A may not operate normally. In order to prevent the occurrence of such an impact, the exoskeleton A may control an operation that protects the driving means.

For example, the exoskeleton A may control a position and an angle of the at least one leg 6 depending on a change in height or shape of the AARD B. As a result, a collision between the exoskeleton A and the ground may be avoided. A detailed description of a method of controlling the exoskeleton A for preventing collisions between the exoskeleton A and the ground will be described later with reference to FIGS. 14 to 21.

Referring to FIG. 9, in a state in which the exoskeleton A may be supported, the AARD B may be stored for a certain time or more. Hereinafter, a state in which the AARD B may be stopped for a predetermined time or more may be defined as 'a storage mode'.

In the storage mode, the AARD B may be maintained in a stopped state for a certain time or more, or for greater than or equal to a predetermined storage time. In the storage mode, the height of the AARD B may be kept higher than an AARD reference height or a predetermined AARD storage height.

In the storage mode, a first exoskeleton A₁ may be supported on a first AARD B₁ in a standing posture. The first AARD B₁ may be stored in an overlapped state in which the first exoskeleton A1 may be supported. When a plurality of exoskeleton supports Bn are closely overlapped while a plurality of wearable exoskeletons are supported, a part of the first AARD B1 may be overlapped with a second AARD B2.

The first AARD B1 may be horizontally stacked with a second AARD B2 and stored to a degree which it may not interfere with the first or a second exoskeleton A1 and/or A2. As a result, even in a narrow space, it may be possible to store a number of exoskeletons An, such that a space utility of the AARD B may be improved. When there are more than two exoskeletons A supported on exoskeleton supports B, they may be arranged such that the exoskeleton supports B overlap with each other, while the exoskeletons A do not touch each other. In the storage mode, an outer sole of the foot support 7 for each exoskeleton A may touch the ground. As a result, a load applied to the AARD B may be reduced, increasing a use life of the AARD B and the exoskeleton A.

FIG. 10 shows an AARD B in accordance with an exemplary embodiment. FIG. 11 shows a side view of the exoskeleton support of FIG. 10. Hereinafter, for convenience, a first direction D1 may be defined as a forward direction, user direction, or a walking direction; and a second direction D2 may be defined as a rearward direction, assistant direction, or transfer direction. Referring to Figures 10 and 11, an AARD B may include a lower support 100, an upper support 200, a drive assembly 300, and a chair assembly 400.

The lower support 100 may support an overall weight of the AARD B, including a weight of the upper support 200. The lower support 100 may have a plurality of wheels 114 and 132. A brake may be provided in the plurality of wheels 114 and 132. When the brake is operated or applied, the wheels 114 and 132 may be stopped and parked. On the contrary, when the brake is not operated or applied, the wheels 114 and 132 may be in a moveable state or a non-parked state. In the moveable state of the wheels 114 and 132, the wheels may spin, or may rest and be ready to spin because the brake is not applied.

Depending on whether the wheels 114 and 132 are stopped by the brake, an operation mode of the AARD B may be changed. For example, when the wheels 114 and 132 are stopped in a parked state, the operation mode of the AARD B may be 'a wearing mode' or 'a storage mode'. On the other hand, when the wheels 114 and 132 are in the moveable state, the operation mode of the AARD B may be 'a moving mode'. The lower support 100 may include a motion sensor (100a of FIG. 16). The motion sensor 100a may sense a rotational operation of the wheels 114 and 132 and an operation of the brake.

The upper support 200 may be configured to support the exoskeleton A. The upper support 200 may include a main supporting frame or main frame 210, a walker handle, or user handle 230, and a transport handle or assistant handle 250. The main frame 210 may form an appearance of the upper support 200.

The walker handle 230 may be arranged on the user side of the main frame 210. The transport handle 250 may be arranged on the assistant side of the main supporting frame 210. The upper support 200 may include a charging portion or charger 200a (FIG. 16) therein. The charger 200a may wirelessly provide power to the exoskeleton A or wirelessly charge the exoskeleton A.

Based on an intensity of a power signal or communication signal received from the charger 200a, the main controller 2' of the exoskeleton A may determine that the exoskeleton A is supported on or coupled to the AARD B. A description thereof will be described later with reference to FIGS. 17 and 18.

The drive assembly 300 may adjust the height of the upper support 200. The drive assembly 300 may include a lower pipe or shaft 310, an upper pipe or shaft 330, and a drive such as a hydraulic (or pneumatic) cylinder or motor and gear set. The lower shaft 310 may be coupled to the lower support 100. The upper shaft 330 may be inserted into the lower shaft 310. Alternatively, the lower shaft 310 may be inserted into the upper shaft 330. According to such coupling relationship, the size and shape of the lower shaft 310 and the upper shaft 330 may be varied. For example, an outer dimeter of the upper shaft 330 may correspond to an inner diameter of the lower shaft 310 when the upper shaft 330 is inserted into the lower shaft 310 and when the upper or lower shafts 330 and 310 are cylindrical pipes. The drive of the drive assembly 300 may provide a driving force to raise or lower the upper shaft 330.

A pedal 352 may be used as an operation switch to drive or control the drive in the drive assembly 300. The pedal 352 may be provided on a lower side of the driving assembly 300. The user may drive or stop the drive by pushing the pedal 352. As a result, the height of the AARD B may be adjusted.

The drive assembly 300 may include a drive sensor or a height sensor (300a in FIG. 16). The height sensor 300a may sense an operation of the drive. Based on an operation of the drive, the height sensor 300a may generate a mode switching signal or a mode signal. The mode signal may include information on whether the drive is operated. For example, when the user pushes the pedal 352 to operate the drive, the mode signal may be activated. On the other hand, when the user pushes the pedal 352 again to stop the drive, the mode signal may be inactivate.

The mode signal may thus be activated when the AARD B is switched from the moving mode or the storage mode to the wearing mode, or vice versa. The height of the AARD B may be changed when the mode signal is activated, and the height of the AARD B may be fixed when the mode signal is inactivate. When the height of the AARD B is changed, a shape of the AARD B may also be changed because a chair assembly 400 of the AARD B may be folded or unfolded based on the height of the AARD B. A detailed description of the operation of the exoskeleton A depending on the mode signal will be described later with reference to FIG. 18.

Based on the operation of the drive, the height sensor 300a may generate height information. Height information may include information on a driving direction (e.g., ascending or descending) and a driving amount, such as a force or time of the drive. The height sensor 300a may include a laser distance signal that uses laser beam to calculate the height of the AARD B. A control unit or controller 500 (FIG. 16) of the AARD B to be described later may receive height information from the height sensor 300a. Based on received height information, the controller 500 may calculate the height of the AARD B. Then, based on the calculated height, the controller 500 may determine an operation mode of the AARD B.

In order to determine the operation mode of the AARD B, the controller 500 may use a predetermined AARD reference height. When the calculated height of the AARD B is higher than the predetermined AARD reference height, the controller 500 may determine that the operation mode of the AARD B is 'a moving mode' or 'a storage mode'. On the contrary, when the calculated height is lower than the predetermined AARD reference height, the controller 500 may determine that the operation mode of the AARD B is 'a wearing mode'.

The controller 500 may transmit height information and the above-mentioned mode signal to the main controller 2' of the exoskeleton A. Like the AARD B, the exoskeleton A may calculate, via the main controller 2', the height of the AARD B by using the received height information.

The actuated hip joint 3 or the actuated joint 6b may be controlled according to a change in height of the AARD B and an activation status of the mode signal. Based on received information, the main controller 2' may control an operation of the actuated hip joint 3 and the leg 6 to prevent the exoskeleton A from colliding with the ground. Alternatively, the main controller 2' may control the subcontroller 3' to operate the actuated hip joint 3 instead of controlling the actuated hip joint 3 directly. A detailed description thereof will be described later.

As shown in FIGS. 12 and 13, the chair assembly 400 may include a seat frame 410, a seat 420, a sub supporter or side support 430, a link frame 440, and a support link or seat link 450. The seat frame 410 may form an appearance of a chair. A front area of the seat frame 410 may be formed wider than a rear area of the seat frame 410. A width of the seat frame 410 may diminish in the user direction so that the seat frame 410 does not interfere with the user's legs. Typically, when the user sits on the chair, his legs naturally extend slightly outward. Therefore, the seat frame 410 may have such a form where an area may diminish further away from the driving assembly 300.The seat frame 410 and the link frame 440 may be rotatably coupled to an upper shaft 330 via a link bracket (not shown) provided between the seat frame 410 and the link frame 440. The seat 420 may be provided on an upper surface of the seat frame 410. The seat 420 may have a shape which may correspond to that of the seat frame 410. Alternatively, a shape of the seat 420 may correspond to a shape of the user when the user's buttocks sits in the seat 420. The seat 420 may be formed integrally with the seat frame 410. Alternatively, the seat 420 may be separately manufactured to be coupled to the seat frame 410.

The side support 430 may be provided on a side of the seat 420. The chair assembly 400 may include at least two side supports 430, each provided on a separate side of the seat 420. The side support 430 may support a part of a exoskeleton A. The link frame 440 may be coupled to a lower surface of the seat frame 410. The seat link 450 may be coupled to the link frame 440. The support link 450 may rotatably connect the link bracket and the lower housing 150. As a result, the seat link 450 may aid in a rotation of the seat 420.

In a state in which the seat 420 is unfolded, the seat frame 410 may be perpendicular to the upper shaft 330 and/or parallel to the ground. The AARD B may be in a standing state when the seat 420 is unfolded. The seat 420 may face an upper side of the AARD B. In a state in which the seat 420 is folded, the seat frame 410 may be parallel to the upper shaft 330 and perpendicular to the ground. The AARD B may be in a chair state or seated state when the seat 420 is unfolded. In the wearing or donning mode of the AARD B, the chair assembly 400 and/or the AARD B may be in a chair or seated state. In the moving mode or the storage mode of the AARD B, the chair assembly 400 may be in a standing state.

FIGS. 14 and 15 show a state in which an exoskeleton A may be supported on an AARD in accordance with an exemplary embodiment. FIG. 16 is a block diagram showing a mutual relationship of an exoskeleton A and an AARD B in accordance with an exemplary embodiment.

Referring to FIGS. 14 to 16, the exoskeleton A may be supported on an AARD B. In a state in which the exoskeleton A is supported on the AARD B, the main controller 2' may control a posture of the exoskeleton A. The main controller 2' may include a control portion or a control module 2a, a position sensor 2b, a communication module 2c, and a power source module or battery pack 2d.

The control module 2a may control a position and joints of the leg 6. As described above, the leg 6 may include an upper leg frame 6a, an actuated joint 6b, and a lower leg frame 6d. In order to control a position and joints of the leg 6, the control module 2a may control an operation of the actuated hip joint 3 and the actuated joint 6b. The control module 2a may further control the subcontroller 3' (which may also serve as a slave controller) to control the actuated hip joint 3.

By controlling the operation of the actuated hip joint 3, the control module 2a may change a first angle or hip joint angle θ1 between the main frame 4 and the upper leg frame 6a. By controlling the operation of the actuated joint 6b, the control module 2a may change a second angle or knee joint angle Θ2 between the upper leg frame 6a and the lower leg frame 6d.

Also, the control module 2a may receive data from at least one pressure sensor provided in a foot support 7. Based on received data, the control module 2a may determine whether the foot support 7 is in contact with the ground. When the foot support 7 contacts the ground in the moving mode, the control module 2a may control the operation of the actuated hip joint 3 and the actuated joint 6b to space the foot support 7 apart from the ground. When the control module 2a determines from the pressure sensor that the foot support 7 is in contact with the ground, the control module 2a may adjust the first and second angles Θ1 and Θ2 such that the foot support 7 is lifted from the ground to prevent contact.

The control module 2a may also reduce the overall length of the leg 6. The upper leg frame 6a and the lower leg frame 6d of each leg 6 may be formed of a plurality of frame members that overlap with each other. The control module 2a may increase an overlapping length of the frame members that comprise the upper leg frame 6a and/or the lower leg frame 6d to reduce the length of the upper leg frame 6a and the lower leg frame 6d. The overall length of the leg 6 may be reduced so that the foot support 7 may be spaced apart from the ground.

By controlling the actuated hip joint 3, the control module 2a may adjust the first angle Θ1 between the main frame 4 and the upper leg frame 6a. Similarly, by controlling the actuated joint 6b, the control module 2a may adjust the second angle θ2 between the upper leg frame 6a and the lower leg frame 6d. By adjusting the first angle θ1 and the second angle θ2, the foot support 7 may be spaced apart from the ground. A combination of the first angle θ1 and the second angle θ2 may be variously configured to space the foot support 7 apart from the ground. Accordingly, when the AARD B is moved, the exoskeleton A may not collide with the ground.

On the other hand, when the foot support 7 is spaced apart from the ground in the wearing mode or the storage mode, the control module 2a may control the operation of the actuated hip joint 3 and the actuated joint 6b so that the foot support 7 contacts the ground. A combination of the first angle θ1 and the second angle θ2 may be variously configured to make the foot support 7 contact the ground. The control module 2a may increase the overall length of the leg 6. The overlapping length of the frame members forming the upper leg frame 6a and the lower leg frame 6d may be reduced, respectively, to increase the length of each of the upper leg frame 6a and the lower leg frame 6d. Therefore, the overall length of the leg 6 may be increased, and the foot support 7 may contact the ground.

Accordingly, a load of the exoskeleton A applied to the AARD B may be dispersed on the ground. In addition, since the foot support 7 may maintain contact with the ground, the user may easily fix his or her shoe or foot to the foot support 7 in the wearing mode. As a result, convenience of the exoskeleton A may be improved.

The position sensor 2b may sense position information of the exoskeleton A. The position sensor 2b may include various modules capable of sensing position information. For example, the position sensor 2b may include a Global Positioning System (GPS) or an Inertial Measurement Unit (IMU). For reference, this is only one example, and various kinds of position measurement modules may be included in the position sensor 2b.

Position information measured in the position sensor 2b may be transmitted to the control module 2a. The control module 2a may sense a shape or posture change or height change of the exoskeleton A. A shape or posture of the exoskeleton A may change based on the first and second angles Θ1 and Θ2. Based on position information measured in the position sensor 2b, the control module 2a may calculate a height and a height change of the main controller 2'. The control module 2a may sense a shape change based on an operation of the actuators or motors in the actuated joint 6b and/or the actuated hip joint 3. There may be an optional sensor in actuated hip joint 3 and/or the actuated joint 6b that detects a driving amount of the actuators or motors, or detects an angle or movement of the upper and lower leg frames 6a and 6d.

By using the calculated height of the main controller 2', the control module 2a may determine an operation mode of the AARD B. In order to determine the operation mode of the AARD B, the control module 2a may use a predetermined exoskeleton reference height. For example, when the calculated height is higher than the predetermined exoskeleton reference height, the control module 2a may determine that the operation mode of the AARD B is 'a moving mode' or 'a storage mode'. On the contrary, when the calculated height is lower than the predetermined exoskeleton reference height, the control module 2a may determine that the operation mode of the AARD B is 'a wearing mode'.

By calculating a height change of the main controller 2' incurred in the process of switching from the moving mode or the storage mode to the wearing mode, the control module 2a may control the posture of the exoskeleton to prevent collisions with the ground. A detailed description of a posture control method of the exoskeleton A will be described later with reference to FIG. 17 and FIG. 18.

The communication module 2c may exchange data with the AARD B. The communication module 2c may receive height information from the communication module 520 of the controller 500 of the AARD B. Height information may be generated in the height sensor 300a provided in a driving unit 300. As described previously, height information generated in the height sensor 300a may include information on an operation direction and an operation amount of the drive.

By using received height information, the control module 2a may calculate the height and the height change of the AARD B. By using the calculated height of the AARD B, the control module 2a may determine the operation mode of the AARD B. For example, when the calculated height of the AARD B is higher than the predetermined AARD reference height, the control module 2a may determine the operation mode of the AARD B as 'a moving mode' or 'the storage mode'. On the contrary, when the calculated height is lower than the predetermined AARD reference height or another predetermined reference height (such as a predetermined chair height), the control module 2a may determine the operation mode of the AARD B as 'a wearing mode'.

The communication module 2c may also receive a mode signal from the communication module 520 of the AARD B. The mode signal may be activated when the AARD B is switched from the moving mode or the storage mode to the wearing mode or vice versa. The height of the AARD B may change when the mode signal is activated, and the height of the AARD B may be fixed when the mode signal is inactive. The mode signal, which is based on an operation of the drive in the driving assembly, may therefore be a signal that indicates when the AARD B is transitioning between different operation modes. When the mode signal is activated, the control module 2a may control the posture of the exoskeleton A so that the exoskeleton A does not collide with the ground. A detailed description thereof will be described later with reference to FIG. 18.

The battery pack 2d may receive and store power from the charger 200a of the AARD B. The battery pack 2d may receive the power wirelessly from the charger 200a. Alternatively, the battery pack 2d may receive power directly from an external source.

Based on an intensity of a power signal received from the charger 200a by the battery pack 2d, the control module 2a may determine whether the exoskeleton A is supported. Additionally, based on an intensity of the communication signal received in the communication module 2c, the control module 2a may determine whether the exoskeleton A is supported. When the exoskeleton A is supported on the AARD B, the control module 2a may control the posture so that the exoskeleton A does not collide with the floor. A description thereof will be described later with reference to FIGS. 17 and 18.

When the mode of the AARD B is switched from the moving mode or the storage mode to the wearing mode, an operation of the exoskeleton A that prevents collision with the ground will be described in detail.

Referring to FIG. 17, in a method of controlling the exoskeleton A in accordance with an exemplary embodiment of this application, the control module 2a may determine a support status of the exoskeleton A; i.e., the control module may determine whether the exoskeleton A is supported on the AARD B (S110). Whether the exoskeleton A is supported on the AARD B may be determined based on an intensity of a communication signal between a communication module 2c of the exoskeleton A and a communication module 520 of the AARD B.

The control module 2a may further determine the support status of the exoskeleton A based on an intensity of a power signal received from the AARD B, i.e., based on a power exchange amount per unit time between the battery pack 2d of the exoskeleton A and the charger 200a of the AARD B. A method of determining the support status of the exoskeleton A is not limited to the above-mentioned method, and may be modified in various ways and implemented.

When the exoskeleton A is supported on the AARD B, the control module 2a may measure or calculate the height of the exoskeleton A (S120). By using position information measured in the position sensor 2b, the control module 2a may calculate the height of the exoskeleton A.

The control module 2a may then determine whether the calculated height of the exoskeleton A has been reduced (S130). By continuously calculating a height of the exoskeleton A, the control module 2a may calculate the height change of the exoskeleton A. As a result, the control module 2a may determine whether the height of the exoskeleton A has been reduced.

When the height of the exoskeleton A has been reduced, the control module 2a may control an operation of the actuated hip joint 3 (S140). The control module 2a may thus reduce the first angle θ1 (Fig. 19) between the main frame 4 and the upper leg frame 6a. Accordingly, a third angle θ3 formed between an upper leg frame 6a and the ground may be reduced.

When the height of the exoskeleton A is continuously reduced, the control module 2a may continuously control an operation of the leg 6 (S150). By controlling the actuated joint 6b, the control module 2a may reduce the second angle θ2 between the upper leg frame 6a and the lower leg frame 6d. Accordingly, a fourth angle θ4 formed between the bottom surface of the foot support 7 and the ground may be reduced.

While the second angle θ2 is reduced, the first angle θ1 may also be continuously reduced. Therefore, the third angle θ3 and the fourth angle θ4 may be simultaneously reduced. When the measured height of the exoskeleton A is smaller than a first predetermined exoskeleton height, the control module 2a may operate only the actuated hip joint 3. When the measured height is smaller than a second predetermined exoskeleton height, the control module 2a may simultaneously operate the actuated hip joint 3 and the actuated joint 6b. The second predetermined exoskeleton height may be smaller than the first predetermined exoskeleton height.

If a pressure sensor of the foot support 7 senses an impact with the ground while the third angle θ3 and the fourth angle θ4 are decreased, the control module 2a may increase a rate of change in the first angle θ1 and the second angle θ2. As a result, the foot support 7 of the exoskeleton A may maintain a state that is spaced apart from the ground.Some of the above described steps S110 to S150 may be omitted and implemented. For example, step S110 of determining whether the exoskeleton A is supported may be omitted.

In summary, in an exemplary embodiment, when the exoskeleton A is supported on the AARD B, a main controller 2' may perform a control method that protects a drive system, which may include the motors or actuators of the actuated hip joint 3 and the actuated joint 6b. The main controller 2' may also control an optional drive having a motor or actuator (e.g., electric, pneumatic, hydraulic) provided in the lumbar/back frame 2 or in the hip joint structure of the main frame 4. The main controller 2' may control a posture of the exoskeleton A by using height information measured in the exoskeleton A.

Although not explicitly shown, the control module 2a may sense a change in a shape or posture of the exoskeleton A based on, for example, a change in θ1 and θ2. When the shape of the exoskeleton A is changed, the control module 2a may control the operation of the actuated hip joint 3 or the actuated joint 6b. The control method of the exoskeleton A according to a shape change may be substantially the same as the control method of the exoskeleton A depending on the height change. However, these are merely some examples, and this application is not limited thereto.

FIG. 18 is a flowchart showing a method of controlling an exoskeleton in accordance with another embodiment. Hereinafter, any content overlapping with the content described in FIG. 17 may be omitted, while a difference will be mainly described. Referring to FIG. 18, in a method of controlling the exoskeleton A in accordance with an exemplary embodiment, the control module 2a may determine a suppot status, or whether the exoskeleton A is supported (S210).

When the exoskeleton A is supported on an AARD B, the control module 2a may determine whether the mode signal received from the AARD B is activated (S215), i.e., the control module 2a may determine an activation status of the mode signal. The communication module 2c may receive the mode signal from the communication module 520 of the AARD B and transmit the received mode signal to the control module 2a.

As previously explained, the mode signal is activated when the AARD B switches modes and is based on an operation of the drive assembly 300. The control module 2a may receive height information of the AARD B measured in the height sensor 300a of the AARD B (S220). The communication module 2c may receive height information from the communication module 520 of the AARD B. Received height information may be transmitted to the control module 2a. Height information generated in the height sensor 300a may include information on an operation direction and an operation amount of the drive.

The control module 2a may calculate the height of the AARD B by using the received height information generated in the height sensor 300a. Then, the control module 2a may determine whether the height of the AARD B on which the exoskeleton A is supported has been reduced (S230). By continuously calculating the height of the AARD B, the control module 2a may calculate the height change of the AARD B. When the height of the AARD B is reduced, the height of the exoskeleton A supported on the AARD B may also be reduced.

For reference, steps S220 and S230 may be performed by being replaced with steps S120 and S130 described above with reference to FIG 17. By using position information measured in the position sensor 2b, the control module 2a may calculate the height and a height change of the exoskeleton A instead of a height of the AARD B.

When the height of the AARD B is reduced, the control module 2a may control an operation of the actuated hip joint 3 (S240). To reduce the first angle (θ1 in FIG. 19) between the main frame 4 and an upper leg frame 6a. Accordingly, a third angle (θ3 in FIG. 19) formed between an upper leg frame 6a and the ground may also be reduced.

When the height of the AARD B is continuously reduced, the control module 2a may further control an operation of the leg 6 (S250). The control module 2a may reduce the second angle θ2 between the upper leg frame 6a and the lower leg frame 6d. Accordingly, a fourth angle θ4 formed between the bottom surface of a foot support 7 and the ground may also be reduced.

When the measured height of the AARD B is smaller than a first predetermined AARD B height, the control module 2a may operate only the subcontroller 3' and/or the actuated hip joint 3. When the measured height is smaller than a second predetermined AARD B height, the control module 2a may simultaneously operate the actuated hip joint 3 and the actuated joint 6b. The second predetermined AARD B height may be smaller than the first predetermined AARD B height.

Some of above described steps S210 to S250 may be omitted and implemented. In an exemplary embodiment, on the assumption that the mode signal is activated from the AARD B, the main controller 2' may perform a control method that protects the drive system. The main controller 2' may control a posture of the exoskeleton A by using height information received from the AARD B.

Additionally, although not explicitly shown in the drawings, the control module 2a may sense a change in a shape of the AARD B. For example, based on the signal sensed in the height sensor 300a, the control module 2a may infer a change in the shape of the AARD B based on the seat 420 that folds and unfolds. As an alternative example, the control module 2a may infer a change in the shape of the AARD B based on a sensor provided in the actuated hip joint 3 and/or the actuated joint 6b of the exoskeleton A when the exoskeleton A is supported on the AARD B.

When the shape of the AARD B is changed, the control module 2a may control the operation of the actuated hip joint 3 and the actuated joint 6b. The control method of the exoskeleton A depending on the shape change of the AARD B may be substantially the same as the control method of the exoskeleton A depending on the height change of the AARD B. However, these are merely some examples, and this application is not limited thereto. Hereinafter, an operation of the exoskeleton A will be described in an example where the height of the exoskeleton A supported on the AARD B is changed. FIGS. 19 to 21 are side views showing an operation of an exoskeleton A supported by an AARD B in accordance with an exemplary embodiment. When an AARD B is switched from 'a moving mode' or 'a storage mode' to 'a wearing mode', the overall height of the AARD B may be reduced.

Referring to FIG. 19, the main controller 2' may control an operation of the actuated hip joint 3 when the height of the exoskeleton A supported on the AARD B is reduced. As the actuated hip joint 3 is controlled, the first angle θ1 between the main frame 4 and the upper leg frame 6a may be reduced. Accordingly, the third angle or thigh angle θ3 between the upper leg frame 6a and the ground may also be reduced.

When the height of the exoskeleton A may be at a height that is smaller than a first predetermined exoskeleton height and the AARD B is at a height H2, the main controller 2' may reduce the third angle θ3 between the upper leg frame 6a and the ground by controlling the actuated hip joint 3. As an alternative, heights H2, H3, and H4 shown in FIGs. 19-21 may represent heights of the exoskeleton A instead of the AARD B. While the third angle θ3 is reduced, the second angle θ2 between the upper leg frame 6a and the lower leg frame 6d may remain unchanged. Accordingly, the fourth angle θ4 formed between the bottom surface of the foot support 7 and the ground may be increased.

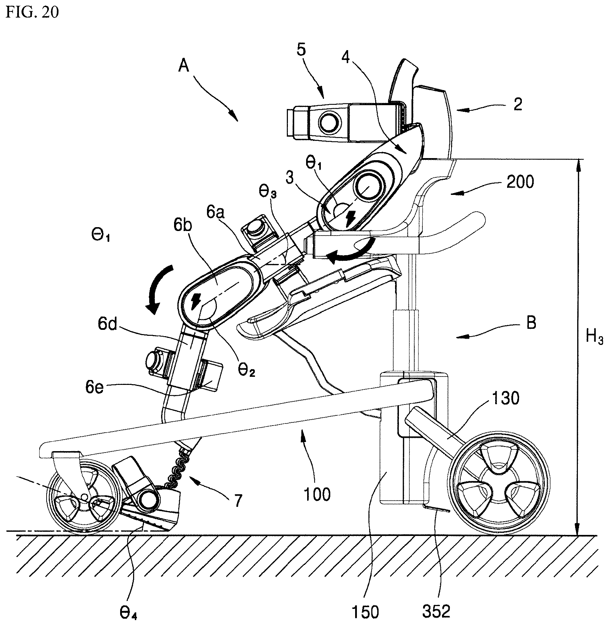

Referring to FIG. 20, when the height of the exoskeleton A is continuously reduced to have a height is less than a second predetermined exoskeleton height and the height of the AARD B has a height H3, the main controller 2' may reduce the second and fourth angles θ2 and θ4 by controlling the actuated joint 6b. The second predetermined exoskeleton height may be smaller than the first predetermined exoskeleton height. In this case, the main controller 2' may continue to operate the actuated hip joint 3'. Accordingly, the third angle θ3 formed between the upper leg frame portion frame 6a and the ground may be continuously reduced.

Even if the height of the exoskeleton A is reduced, the foot support 7 of the exoskeleton A may be maintained in a state that is spaced apart from the ground while the AARD B transitions to the wearing mode. While the third angle θ3 and the fourth angle θ4 are reduced, when a pressure sensor of the foot assembly 7 senses an impact with the ground, the main controller 2' may increase or change the first angle θ1 and/or the second angle θ2 so that the exoskeleton A may be kept spaced apart from the ground.

Referring to FIG. 21, the height of the AARD B may be fixed at a height H4 when the AARD B is completely switched to the wearing mode. In the wearing mode, the chair assembly 400 of the AARD B may be switched to the seated state.

The main controller 2' may control the actuated hip joint 3 so that the upper leg frame 6a may become parallel to the ground in the process of switching to the wearing mode. Accordingly, the third angle θ3 between the upper leg frame 6a and the ground may converge to 0 degrees.

The main controller 2' may control the actuated joint 6b so that the second angle θ2 becomes close to a right angle or 90 degrees. Accordingly, the fourth angle θ4 may converge to 0 degrees. Additionally, based on data of the pressure sensor provided on a lower surface of the foot support 7, the main controller 2' may determine whether the foot support 7 is in contact with the ground.

If the foot support 7 is spaced apart from the ground in the 'wearing mode', an operation of the leg 6 and the actuated hip joint 3 may be controlled such that the foot support 7 comes in contact with the ground. The main controller 2' may further increase a length of the leg 6 so that the exoskeleton A contacts the ground.

In summary, when the AARD B is switched from the moving mode or the storage mode to the wearing mode and the height of the exoskeleton A is lowered, the posture of the exoskeleton A may be automatically controlled so that the exoskeleton A does not touch the ground during the transition. On the other hand, when the AARD B is switched from the wearing mode to the moving mode or the storage mode, the height of the exoskeleton A and the AARD B may be increased. When the height of the exoskeleton A is increased, a posture change of the exoskeleton A may be operated in a reverse order of the above described content, and a detailed description thereof will be omitted here.

FIG. 22 is a front view showing an exoskeleton supported on an exoskeleton support in the moving mode. FIG. 23 is a front view showing an exoskeleton supported on an AARD in the wearing mode. Although FIG. 22 shows that the exoskeleton is spaced apart from the ground, it may be replaced with the storage mode in which a part thereof contacts the ground.

Referring to FIG. 22, an assistant may transport the AARD B to a desired position. The assistant may put the exoskeleton A on the user or may help the user don the exoskeleton A. The assistant may switch the AARD B to the wearing mode so that the user may sit to put on the exoskeleton A., since a lower body of the user may be weak.

The assistant may push down on the upper or top side such that the height of the AARD B is reduced. As a result, the chair assembly 400 may be switched to a seated state when the height of the AARD B is reduced.

Alternatively, when the assistant drives a drive of the drive assembly 300 of the AARD B through a pedal 352 or a separate switch, the height of the AARD B may be reduced. Accordingly, the chair assembly 400 may be switched to a seated state and the AARD B may be switched to the wearing mode' D11 and D12 will be described later with reference to FIG. 23.

Referring to FIG. 23, when the AARD B stops descending and is completely switched to the wearing mode, a posture of a foot support 7 of the exoskeleton A may be adjusted to contact the ground. Based on data from the pressure sensor provided in the foot support 7, the main controller 2' may determine whether the foot support 7 is in contact with the ground.

When the foot support 7 is spaced apart from the ground in the wearing mode, the operation of the leg 6, actuated joint 6b, and/or the actuated hip joint 3 may be controlled such that the foot support 7 comes in contact with the ground. The AARD B may communicate with the exoskeleton A to adjust the height of the AARD B so that an end of the foot support 7 contacts the ground. Each leg 6 may be controlled by the main controller 2' to extend outward from the exoskeleton A by a predetermined angle due to a hip joint structure (not shown) in the main frame 4. There may be two legs 6 to correspond to two legs of a user. When a user sits, his legs may naturally extend outward from a body of the user. When the user sits in the AARD B, each leg 6 of the exoskeleton A may slightly extend outward to improve convenience when the user wears the exoskeleton A.

Accordingly, a distance between the legs 6 (for example, D21 in FIG. 23) when the AARD B is in the wearing mode may be wider than a distance between the legs 6 (for example, D11 in FIG. 22) in the moving mode or the storage mode. Similarly, a distance between the foot supports 7 coupled to each leg 6 (for example, D22 in FIG. 23) may be wider in the wearing mode than a distance between the foot supports 7 (for example, D12 in FIG. 22) in the moving mode or the storage mode. In summary, when the AARD B is switched from the moving mode or the storage mode to the wearing mode, the posture of the exoskeleton A may be automatically changed so that the user may wear it conveniently. Alternatively, the assistant may manually position the legs 6 of the exoskeleton A so that they open in the wearing mode.

Accordingly, the user may sit on a chair of the AARD B to wear the exoskeleton A, further improving convenience of the exoskeleton A. Since the posture of the exoskeleton A may be automatically controlled, the user may wear the exoskeleton A without a number of assistants, and more users at a facility may use multiple exoskeletons A at the same time. In addition, since less time is needed to prepare users, more users may use a single exoskeleton A within a certain time range, increasing efficiency and profitability of an operator of exoskeletons A. Through the above-mentioned control method of the exoskeleton A, a control algorithm may be simplified. As a result, maintenance costs may be reduced and an operation stability may be improved.

Since various substitutions, changes, and modifications may be made within the scope that does not deviate the technical idea of this application for those skilled in the art to which this application pertains, this above-mentioned application is not limited by the above-mentioned embodiments and the accompanying drawings.

Embodiments disclosed herein may control a wearable assistive device such as an exoskeleton so that a support or foot assembly does not collide with the ground when a height or a shape of the exoskeleton is changed in a state in which the exoskeleton is supported on an adaptive assistive and/or rehabilitative device (AARD) or multi-function compound supporting apparatus. Embodiments disclosed herein may control the exoskeleton so that a user may wear the exoskeleton in a sitting posture. Embodiments disclosed herein may control the exoskeleton depending on a change of height or shape of the AARD.

Embodiments disclosed herein may control the exoskeleton such that an interference generated between the AARD and the exoskeleton is minimized when the height or the shape of the AARD is changed.

Embodiments disclosed herein are not limited to the above-mentioned objects, and the other objects and the advantages of disclosed embodiments which are not mentioned may be understood by the following description, and more clearly understood by the disclosed embodiments. It will be also readily seen that the objects and the advantages of disclosed embodiments may be realized by means indicated in the patent claims and a combination thereof.

A wearable assistive device, e.g., an exoskeleton, according to embodiments disclosed herein may be provided with a subcontroller actuated hip joint 3 to generate a first assistant force and a main controller to control a leg or leg assembly that generates a second assistant force. By controlling an operation of the subcontroller and the leg depending on a change in height or shape of the exoskeleton, collisions that may occur between the exoskeleton and the ground may be minimized.

In addition, the exoskeleton according to disclosed embodiments may be provided with the main controller to adjust an angle formed between a leg and the ground, and an angle formed between a foot support and the ground. Further, when the height of the exoskeleton is fixed at a certain height or lower, the leg may be extended outward. Thus, the exoskeleton may be controlled so that the user may wear the exoskeleton in a sitting posture. There may be a pair of legs on the exoskeleton such that the legs extend away from each other in a sitting posture.

Further, main controller may control an operation of the subcontroller, actuated hip joint, and the leg based on height information received from an adaptive assistive and/or rehabilitatibe device (AARD). Depending on the change in height or shape of the AARD, the posture of the exoskeleton may be controlled. As a result, depending on the change in height or the shape of the AARD, collisions that may be generated between the exoskeleton and the ground may be minimized.

The main controller may operate the subcontroller and/or the actuated hip joint when the height of the exoskeleton is smaller than a first reference height, and operate the subcontroller and the leg or an actuated joint of the legsimultaneously when it is smaller than a second reference height. As a result, any interference that may be generated between the AARD and the exoskeleton may be minimized in a process where the height of the AARD is lowered.

The exoskeleton may prevent a collision or impact between the foot support and the ground as the height or the shape of the exoskeleton is changed while the exoskeleton is supported on the AARD. By preventing collisions, an operation stability of the exoskeleton may be improved. As a result, a use life may be prolonged and maintenance costs may be reduced.

Further, in the exoskeleton, the posture may be changed so that the user may wear the exoskeleton in a sitting posture. Accordingly, a wearing convenience of the user may be improved. For example, in a case of a patient or user with an uncomfortable leg, it may be possible for the patient to wear the exoskeleton with minimal movement, improving satisfaction of the patient and/or a wearer. Further, since the time required to wear the exoskeleton is reduced, more users may use the exoskeleton during the same time. Therefore, a profitability of an operator who uses the exoskeleton may be improved. Further, an operation reliability of the exoskeleton may be improved, when collisions are reduced.

The posture may be automatically controlled so that the AARD and the exoskeleton do not collide with each other in a process where the AARD is transformed into a chair shape. As a result, in a process where the height of the AARD is lowered, interferences or collisions which may be generated in the exoskeleton may be minimized. Additionally, a control algorithm of the exoskeleton may be simplified. As a result, a control stability of the exoskeleton may be improved.

Embodiments disclosed herein may be implemented as a wearable assistive device configured to be supported on an adaptive assistive and/or rehabilitative device (AARD). The wearable assistive device may include a main frame that secures to a waist or a pelvis of a user, a leg assembly that extends downward along the legs of the user from an end of the main frame, and a main controller configured to change a configuration of the leg assembly while being supported on the AARD.

The leg assembly may include an upper leg frame connected to the end of the main frame, a lower leg frame connected to an end of the upper leg frame, and an actuated joint that adjusts a knee joint angle between the upper leg frame and the lower leg frame.

The main controller may control the actuated joint so that the wearable assistive device is not in contact with a ground surface when a configuration (such as a shape or height) of the wearable assistive device is changed.

An actuated hip joint may be provided between the main frame and the upper frame, wherein the actuated hip joint is controlled to adjust a hip joint angle between the upper leg and the main frame, and wherein the main controller controls the actuated hip joint so that a thigh angle between the upper leg and the ground surface is reduced when the shape of the wearable assistive device is changed or when the height of the wearable assistive device is reduced.

A foot support may be connected to an end of the leg and supports a foot or a shoe of the user. The main controller may control the actuated joint so that a foot angle formed between a lower surface of the foot support and the ground is reduced when the shape of the wearable assistive device is changed or the height of the wearable assistive device is reduced.

An actuated hip joint may be controlled by a subcontroller provided on a side of the main frame, wherein the subcontroller adjusts a hip joint angle of the actuated hip joint between the leg assembly and the main frame, and wherein the main controller controls the subcontroller so that, if the wearable assistive device is in contact with the ground, the wearable assistive device no longer contacts the ground.

The main controller may operate only the subcontroller when a height of the main controller is lower than a first predetermined reference height, and the main controller may operate the subcontroller and the leg assembly when the height of the main controller is lower than a second predetermined reference height, the second predetermined reference height being lower than the first reference height.

The main controller may move the leg assembly outward when the height of the wearable assistive device is fixed lower than the second reference height.

The main controller may determine whether the wearable assistive device is in a state supported on the AARD based on an intensity of a communication signal or power signal received from the AARD.

Embodiments disclosed herein may be implemented as a wearable assistive device configured to be supported on an adaptive assistive and/or rehabilitative device (AARD) and configured to receive a height signal and a mode signal from the AARD, the height signal indicating height information of the AARD, and the mode signal indicating when the AARD transitions between seated and standing states. The wearable assistive device may comprise a main frame configured to support a waist or a pelvis, a leg assembly extending from an end of the main frame, and a main controller to control an operation of the leg assembly, wherein the main controller may include a communication module to receive the height information, and a control module to control an operation of the leg assembly based on the received height information.

The control module may calculate the height of the AARD by using received height information, and may control the operation of the leg assembly so that the wearable assistive device is spaced apart from the ground when the control module determines that the height of the AARD is being reduced based on the calculated height.

A subcontroller may be formed on a side of the main frame to adjust a hip joint angle between the leg assembly and the main frame. The control module may control the subcontroller so that a first ground angle formed between the leg assembly and the ground is reduced when the height of the AARD is reduced.

A foot support may be provided at an end of the leg assembly. The control module may control the leg assembly so that a second ground angle formed between a lower surface of the foot support and the ground is reduced when the height of the AARD is reduced.

The communication module may receive the mode signal from the AARD, and the control module may control the operation of the leg assembly based on received height information when the received mode signal is activated.

The received height information may be generated in a drive assembly of the AARD that adjusts the height of the AARD, and wherein the received mode signal is generated by a pedal used as an operation switch of the drive assembly.

Embodiments disclosed herein may be implemented as a control system, comprising a robot control system including a robot control module provided in a wearable assistive device, the wearable assistive device having a main frame configured to support a waist or pelvis, and a leg assembly extending from an end of the main frame, the leg assembly including a first actuated joint; and, a support control system including a support control module provided in an adaptive assistive and/or rehabilitative device (AARD) on which the wearable assistive device is configured to be supported. The robot control system and the support control system may wirelessly exchange height information, movement information, and communication signals, and the robot control module may be configured to control the first actuated joint based on the exchanged height information and movement information, and may determine that the wearable assistive device is in a supported state when an intensity of a received communication signal from the AARD is greater than or equal to a predetermined intensity.

The robot control system may further include a position sensor to sense a height of the wearable assistive device, a power source, and a robot communication module. The support control system may further include a height sensor provided in a drive assembly of the AARD to sense a drive amount of the AARD, a motion sensor provided in at least one wheel of the AARD to sense a turning of the wheel or a braking of the wheel, a charger that supplies power to the power source, and a support communication module that communicates with the robot communication module.

The robot control module may be further configured to control a length of the leg assembly. A first actuator may provide a first rotational force at the first actuated joint of the leg assembly such that the robot control module controls a first angle of the first actuated joint. When the wearable assistive device is in the supported state, the robot control module may control the first actuator to reduce the first angle when the robot control module determines that the height of the wearable assistive device is decreasing based on a height sensed by the position sensor.

The robot control module may be further configured to control a subcontroller to control a second actuated joint provided in the leg assembly. A second actuator may provide a second rotational force at the second actuated joint to adjust a second angle of the second actuated joint. When the wearable assistive device is in the supported state, the robot control module may control the second actuator via the subcontroller to reduce the second angle when the robot control module determines that the height of the wearable assistive device is decreasing based on a height sensed by the position sensor.

The robot control module may determine that the AARD is in a moving state when the motion sensor senses that the wheel is turning. When the robot control module determines that the AARD is in the moving state and that the wearable assistive device is in the supported state, the robot control module may control the first and second actuators to reduce the first and second angles.

It will be understood that when an element or layer is referred to as being "on" another element or layer, the element or layer may be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" may encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

The scope of the invention is defined by the appended claims.

## Claims

1. An assistive rehabilitation system, ARS, comprising a wearable assistive device (A) and an adaptive assistive and/or rehabilitation device, AARD (B),
wherein the wearable assistive device (A) configured to be supported by the AARD (B), comprising:
a main frame (4) configured to secure to a waist or a pelvis of a user;
a leg assembly (6) that, in use, extends downward along the legs of the user from ar end of the main frame (4); and
a main controller (2') configured to control an operation of the leg assembly (6) so that the wearable assistive device (A) is not in contact with a ground surface while the wearable assistive device (A) is supported by the AARD (B).

2. The assistive rehabilitation system of claim 1, wherein the leg assembly (6) comprises:
an upper leg frame (6a) connected to the end of the main frame (4),
a lower leg frame (6d) connected to an end of the upper leg frame (6a), and
an actuated joint (6b) to adjust a knee joint angle between the upper leg frame (6a) and the lower leg frame (6d).

3. The assistive rehabilitation system of claim 2, wherein the main controller (2') configured to control the actuated joint (6b), when a shape or a height of the wearable assistive device (A) supported by the AARD (B) is changed.

4. The assistive rehabilitation system of claim 3, wherein the wearable assistive device (A) further comprises an actuated hip joint (3) provided between the main frame (4) and the upper leg frame (6a), wherein the actuated hip joint (3) is controlled to adjust a hip joint angle between the upper leg frame (6a) and the main frame (4), and wherein the main controller (2') is configured to control the actuated hip joint (3) so that a thigh angle between the upper leg frame (6a) and the ground surface is reduced when a height of the wearable assistive device (A) is reduced.

5. The assistive rehabilitation system of claim 3 or 4, wherein the wearable assistive device (A) further comprises a foot support (7) that is connected to an end of the leg assembly (6) and supports a foot or a shoe of the user, wherein the main controller (2') is configured to control the actuated joint (6b) so that a foot angle formed between a lower surface of the foot support (7) and the ground is reduced when a height of the wearable assistive device (A) is reduced.

6. The assistive rehabilitation system of any one of claims 3 to 5, wherein the wearable assistive device (A), further comprises an actuated hip joint (3) controlled by a subcontroller (3') provided on a side of the main frame (4), wherein the subcontroller (3') is configured to adjust a hip joint angle of the actuated hip joint (3) between the leg assembly (6) and the main frame (4), and wherein the main controller (2') is configured to control the subcontroller (3') so that collisions between the wearable assistive device (A) and the ground are minimized.

7. The assistive rehabilitation system of claim 1 or 2, wherein the wearable assistive device (A) further comprises a subcontroller (3'), wherein the main controller (2') is configured to being coupled to the main frame (4), the main controller (2') is configured to operate only the subcontroller (3') when a height of the main controller (2') is lower than a first predetermined reference height, and wherein the main controller (2') is configured to operate the subcontroller (3') and the leg assembly (6) when the height of the main controller (2') is lower than a second predetermined reference height.

8. The assistive rehabilitation system of claim 7, wherein the main controller (2') is configured to move the leg assembly (6) outward when the height of the wearable assistive device (A) is fixed lower than the second reference height.

9. The assistive rehabilitation system of any one of claims 3 to 6, wherein the main controller (2') is configured to determine whether the wearable assistive device (A) is in a state supported by the AARD (B) based on an intensity of a communication signal or power signal received from the AARD (B).

10. The assistive rehabilitation system of any one of claims 3, 4, 5, 6 or 9, wherein the wearable assistive device (A) is configured to receive a height signal and a mode signal from the AARD (B), the height signal indicating height information of the AARD (B), and the mode signal indicating when the AARD (B) transitions between seated and standing states
wherein the main controller (2') includes a communication module (2c) to receive the height information, and
a control module (2a) configured to control an operation of the leg assembly (6) based on the received height information.

11. The assistive rehabilitation system of claim 10, wherein the control module (2a) configured to calculate the height of the AARD (B) by using the received height information, and configured to control the operation of the leg assembly (6) so that the wearable assistive device (A) is spaced apart from the ground when the control module (2a) determines that the height of the AARD (B) is being reduced based on the calculated height.

12. The assistive rehabilitation system of claim 10 or 11, further including a subcontroller (3') that is formed on a side of the main frame (4) and configured to adjust a hip joint angle between the leg assembly (6) and the main frame (4), wherein the control module (2a) is configured to control the subcontroller (3') so that a first ground angle formed between the leg assembly (6) and the ground is reduced when the height of the AARD (B) is reduced.

13. The assistive rehabilitation system of any one of claims 10 to 12, further comprising a foot support (7) provided at an end of the leg assembly (6), wherein the control module (2a) is configured to control the leg assembly (6) so that a second ground angle formed between a lower surface of the foot support (7) and the ground is reduced when the height of the AARD (B) is reduced.

14. The assistive rehabilitation system of any one of claims 10 to 13, wherein the communication module (2c) is configured to receive the mode signal from the AARD (B), and the control module (2a) is configured to control the operation of the leg assembly (6) based on the received height information, when the mode signal is activated,
wherein, the mode signal is activated when the AARD (B) transitions between seated and standing states.

15. The assistive rehabilitation system of any one of claims 10 to 14, wherein the received height information is generated in a drive assembly of the AARD (B) that is configured to adjust the height of the AARD (B), and wherein the received mode signal is generated by a pedal used as an operation switch of the drive assembly.

## Patentansprüche

1. Assistierendes Rehabilitationssystem, ARS, das eine tragbare Assistenzvorrichtung (A) und eine adaptive Assistenz- und/oder Rehabilitationsvorrichtung, AARD (B), aufweist,
wobei die tragbare Assistenzvorrichtung (A) so konfiguriert ist, dass sie durch die AARD (B) gestützt wird, mit:
einem Hauptrahmen (4), der so konfiguriert ist, dass er an einer Taille oder einem Becken eines Benutzers befestigt wird;
einer Beinanordnung (6), die sich im Gebrauch entlang der Beine des Benutzers von einem Ende des Hauptrahmens (4) nach unten erstreckt; und
einer Hauptsteuerung (2'), die so konfiguriert ist, dass sie einen Betrieb der Beinanordnung (6) steuert, so dass die tragbare Assistenzvorrichtung (A) nicht in Kontakt mit einer Bodenfläche steht, während die tragbare Assistenzvorrichtung (A) durch die AARD (B) gestützt wird.

2. Assistierendes Rehabilitationssystem nach Anspruch 1, wobei die Beinanordnung (6) aufweist:
einen oberen Beinrahmen (6a), der mit dem Ende des Hauptrahmens (4) verbunden ist,
einen unteren Beinrahmen (6d), der mit einem Ende des oberen Beinrahmens (6a) verbunden ist, und
ein betätigtes Gelenk (6b), um einen Kniegelenkwinkel zwischen dem oberen Beinrahmen (6a) und dem unteren Beinrahmen (6d) einzustellen.

3. Assistierendes Rehabilitationssystem nach Anspruch 2, wobei die Hauptsteuerung (2') so konfiguriert ist, dass sie das betätigte Gelenk (6b) steuert, wenn eine Form oder eine Höhe der durch die AARD (B) gestützten tragbaren Assistenzvorrichtung (A) geändert wird.

4. Assistierendes Rehabilitationssystem nach Anspruch 3, wobei die tragbare Assistenzvorrichtung (A) ferner ein betätigtes Hüftgelenk (3) aufweist, das zwischen dem Hauptrahmen (4) und dem oberen Beinrahmen (6a) vorgesehen ist, wobei das betätigte Hüftgelenk (3) so gesteuert wird, dass es einen Hüftgelenkwinkel zwischen dem oberen Beinrahmen (6a) und dem Hauptrahmen (4) einstellt, und wobei die Hauptsteuerung (2') so konfiguriert ist, dass sie das betätigte Hüftgelenk (3) steuert, so dass ein Oberschenkelwinkel zwischen dem oberen Beinrahmen (6a) und der Bodenfläche reduziert wird, wenn eine Höhe der tragbaren Assistenzvorrichtung (A) reduziert wird.

5. Assistierendes Rehabilitationssystem nach Anspruch 3 oder 4, wobei die tragbare Assistenzvorrichtung (A) ferner eine Fußstütze (7) aufweist, die mit einem Ende der Beinanordnung (6) verbunden ist und einen Fuß oder einen Schuh des Benutzers stützt, wobei die Hauptsteuerung (2') so konfiguriert ist, dass sie das betätigte Gelenk (6b) steuert, so dass ein Fußwinkel, der zwischen einer Unterseite der Fußstütze (7) und dem Boden gebildet ist, reduziert wird, wenn eine Höhe der tragbaren Assistenzvorrichtung (A) reduziert wird.

6. Assistierendes Rehabilitationssystem nach einem der Ansprüche 3 bis 5, wobei die tragbare Assistenzvorrichtung (A) ferner ein betätigtes Hüftgelenk (3) aufweist, das durch eine Hilfssteuerung (3'), die auf einer Seite des Hauptrahmens (4) vorgesehen ist, gesteuert wird, wobei die Hilfssteuerung (3') so konfiguriert ist, dass sie einen Hüftgelenkwinkel des betätigten Hüftgelenks (3) zwischen der Beinanordnung (6) und dem Hauptrahmen (4) einstellt, und wobei die Hauptsteuerung (2') so konfiguriert ist, dass sie die Hilfssteuerung (3') steuert, so dass Kollisionen zwischen der tragbaren Assistenzvorrichtung (A) und dem Boden minimiert werden.

7. Assistierendes Rehabilitationssystem nach Anspruch 1 oder 2, wobei die tragbare Assistenzvorrichtung (A) ferner eine Hilfssteuerung (3') aufweist, wobei die Hauptsteuerung (2') so konfiguriert ist, dass sie mit dem Hauptrahmen (4) gekoppelt ist, die Hauptsteuerung (2') so konfiguriert ist, dass sie nur die Hilfssteuerung (3') betreibt, wenn eine Höhe der Hauptsteuerung (2') niedriger als eine erste vorbestimmte Referenzhöhe ist, und wobei die Hauptsteuerung (2') so konfiguriert ist, dass sie die Hilfssteuerung (3') und die Beinanordnung (6) betreibt, wenn die Höhe der Hauptsteuerung (2') niedriger als eine zweite vorbestimmte Referenzhöhe ist.

8. Assistierendes Rehabilitationssystem nach Anspruch 7, wobei die Hauptsteuerung (2') so konfiguriert ist, dass sie die Beinanordnung (6) nach außen bewegt, wenn die Höhe der tragbaren Assistenzvorrichtung (A) niedriger als die zweite Referenzhöhe festgelegt ist.

9. Assistierendes Rehabilitationssystem nach einem der Ansprüche 3 bis 6, wobei die Hauptsteuerung (2') so konfiguriert ist, dass sie auf der Grundlage einer Stärke eines von der AARD (B) empfangenen Kommunikationssignals oder Stromsignals bestimmt, ob sich die tragbare Assistenzvorrichtung (A) in einem durch die AARD (B) gestützten Zustand befindet.

10. Assistierendes Rehabilitationssystem nach einem der Ansprüche 3, 4, 5, 6 oder 9, wobei die tragbare Assistenzvorrichtung (A) so konfiguriert ist, dass sie ein Höhensignal und ein Modussignal von der AARD (B) empfängt, wobei das Höhensignal Höheninformationen der AARD (B) angibt und das Modussignal angibt, wenn die AARD (B) einen Übergang zwischen einem sitzenden und einem stehenden Zustand vollführt,
wobei die Hauptsteuerung (2') aufweist: ein Kommunikationsmodul (2c), um die Höheninformationen zu empfangen, und
ein Steuermodul (2a), das so konfiguriert ist, dass es einen Betrieb der Beinanordnung (6) auf der Grundlage der empfangenen Höheninformationen steuert.

11. Assistierendes Rehabilitationssystem nach Anspruch 10, wobei das Steuermodul (2a) so konfiguriert ist, dass es die Höhe der AARD (B) mit Hilfe der empfangenen Höheninformationen berechnet, und so konfiguriert ist, dass es den Betrieb der Beinanordnung (6) steuert, so dass die tragbare Assistenzvorrichtung (A) vom Boden beabstandet ist, wenn das Steuermodul (2a) auf der Grundlage der berechneten Höhe bestimmt, dass die Höhe der AARD (B) reduziert wird.

12. Assistierendes Rehabilitationssystem nach Anspruch 10 oder 11, ferner mit einer Hilfssteuerung (3'), die auf einer Seite des Hauptrahmens (4) gebildet und so konfiguriert ist, dass sie einen Hüftgelenkwinkel zwischen der Beinanordnung (6) und dem Hauptrahmen (4) einstellt, wobei das Steuermodul (2a) so konfiguriert ist, dass es die Hilfssteuerung (3') steuert, so dass ein erster Bodenwinkel, der zwischen der Beinanordnung (6) und dem Boden gebildet ist, reduziert wird, wenn die Höhe der AARD (B) reduziert wird.

13. Assistierendes Rehabilitationssystem nach einem der Ansprüche 10 bis 12, ferner mit einer Fußstütze (7), die an einem Ende der Beinanordnung (6) vorgesehen ist, wobei das Steuermodul (2a) so konfiguriert ist, dass es die Beinanordnung (6) steuert, so dass ein zweiter Bodenwinkel, der zwischen einer Unterseite der Fußstütze (7) und dem Boden gebildet ist, reduziert wird, wenn die Höhe der AARD (B) reduziert wird.

14. Assistierendes Rehabilitationssystem nach einem der Ansprüche 10 bis 13, wobei das Kommunikationsmodul (2c) so konfiguriert ist, dass es das Modussignal von der AARD (B) empfängt, und das Steuermodul (2a) so konfiguriert ist, dass es den Betrieb der Beinanordnung (6) auf der Grundlage der empfangenen Höheninformationen steuert, wenn das Modussignal aktiviert wird,
wobei das Modussignal aktiviert wird, wenn die AARD (B) einen Übergang zwischen einem sitzenden und einem stehenden Zustand vollführt.

15. Assistierendes Rehabilitationssystem nach einem der Ansprüche 10 bis 14, wobei die empfangenen Höheninformationen in einer Antriebsanordnung der AARD (B) erzeugt werden, die so konfiguriert ist, dass sie die Höhe der AARD (B) einstellt, und wobei das empfangene Modussignal durch ein Pedal erzeugt wird, das als Betriebsschalter der Antriebsanordnung verwendet wird.

## Revendications

1. Système de rééducation assistée, ARS, comprenant un dispositif d'assistance portable (A) et un dispositif d'assistance et/ou de réhabilitation adaptatif, AARD (B), dans lequel le dispositif d'assistance portable (A) est configuré pour être supporté par l'AARD (B), comprenant :
un cadre principal (4) configuré pour se fixer à une taille ou un pelvis d'un utilisateur ; un ensemble de jambes (6) qui, en utilisation, s'étend vers le bas le long des jambes de l'utilisateur depuis une extrémité du cadre principal (4) ; et
un dispositif de commande principal (2') configuré pour commander un fonctionnement de l'ensemble de jambes (6) de sorte que le dispositif d'assistance portable (A) ne soit pas en contact avec une surface de sol tandis que le dispositif d'assistance portable (A) est supporté par l'AARD (B).

2. Système de rééducation assistée selon la revendication 1, dans lequel l'ensemble de jambes (6) comprend :
un cadre de jambe supérieur (6a) raccordé à l'extrémité du cadre principal (4),
un cadre de jambe inférieur (6d) raccordé à une extrémité du cadre de jambe supérieur (6a), et
une articulation actionnée (6b) pour ajuster un angle d'articulation de genou entre le cadre de jambe supérieur (6a) et le cadre de jambe inférieur (6d).

3. Système de rééducation assistée selon la revendication 2, dans lequel le dispositif de commande principal (2') est configuré pour commander l'articulation actionnée (6b), lorsqu'une forme ou une hauteur du dispositif d'assistance portable (A) supporté par l'AARD (B) est modifiée.

4. Système de rééducation assistée selon la revendication 3, dans lequel le dispositif d'assistance portable (A) comprend en outre une articulation de hanche actionnée (3) prévue entre le cadre principal (4) et le cadre de jambe supérieur (6a), dans lequel l'articulation de hanche actionnée (3) est commandée pour ajuster un angle d'articulation de hanche entre le cadre de jambe supérieur (6a) et le cadre principal (4), et dans lequel le dispositif de commande principal (2') est configuré pour commander l'articulation de hanche actionnée (3) de sorte qu'un angle de cuisse entre le cadre de jambe supérieur (6a) et la surface de sol soit réduit lorsqu'une hauteur du dispositif d'assistance portable (A) est réduite.

5. Système de rééducation assisté selon la revendication 3 ou 4, dans lequel le dispositif d'assistance portable (A) comprend en outre un support de pied (7) qui est raccordé à une extrémité de l'ensemble de jambes (6) et supporte un pied ou une chaussure de l'utilisateur, dans lequel le dispositif de commande principal (2') est configuré pour commander l'articulation actionnée (6b) de sorte qu'un angle de pied formé entre une surface inférieure du support de pied (7) et le sol soit réduit lorsqu'une hauteur du dispositif d'assistance portable (A) est réduite.

6. Système de rééducation assistée selon l'une quelconque des revendications 3 à 5, dans lequel le dispositif d'assistance portable (A), comprend en outre une articulation de hanche actionnée (3) commandée par un dispositif de commande auxiliaire (3') prévu sur un côté du cadre principal (4), dans lequel le dispositif de commande auxiliaire (3') est configuré pour ajuster un angle d'articulation de hanche de l'articulation de hanche actionnée (3) entre l'ensemble de jambes (6) et le cadre principal (4), et dans lequel le dispositif de commande principal (2') est configuré pour commander le dispositif de commande auxiliaire (3') de sorte que des collisions entre le dispositif d'assistance portable (A) et le sol soient minimisées.

7. Système de rééducation assistée selon la revendication 1 ou 2, dans lequel le dispositif d'assistance portable (A) comprend en outre un dispositif de commande auxiliaire (3'), dans lequel le dispositif de commande principal (2') est configuré pour être couplé au cadre principal (4), le dispositif de commande principal (2') est configuré pour faire fonctionner uniquement le dispositif de commande auxiliaire (3') lorsqu'une hauteur du dispositif de commande principal (2') est inférieure à une première hauteur de référence prédéterminée, et dans lequel le dispositif de commande principal (2') est configuré pour faire fonctionner le dispositif de commande auxiliaire (3') et l'ensemble de jambes (6) lorsque la hauteur du dispositif de commande principal (2') est inférieure à une seconde hauteur de référence prédéterminée.

8. Système de rééducation assistée selon la revendication 7, dans lequel le dispositif de commande principal (2') est configuré pour déplacer l'ensemble de jambes (6) vers l'extérieur lorsque la hauteur du dispositif d'assistance portable (A) est fixée inférieure à la seconde hauteur de référence.

9. Système de rééducation assistée selon l'une quelconque des revendications 3 à 6, dans lequel le dispositif de commande principal (2') est configuré pour déterminer si le dispositif d'assistance portable (A) est dans un état supporté par l'AARD (B) d'après une intensité d'un signal de communication ou d'un signal de puissance reçu en provenance de l'AARD (B).

10. Système de rééducation assistée selon l'une quelconque des revendications 3, 4, 5, 6 ou 9, dans lequel le dispositif d'assistance portable (A) est configuré pour recevoir un signal de hauteur et un signal de mode en provenance de l'AARD (B), le signal de hauteur indiquant des informations de hauteur de l'AARD (B), et le signal de mode indiquant lorsque l'AARD (B) passe entre des états assis et debout dans lequel le dispositif de commande principal (2') comporte un module de communication (2c) pour recevoir les informations de hauteur, et
un module de commande (2a) configuré pour commander un fonctionnement de l'ensemble de jambes (6) d'après les informations de hauteur reçues.

11. Système de rééducation assistée selon la revendication 10, dans lequel le module de commande (2a) est configuré pour calculer la hauteur de l'AARD (B) en utilisant les informations de hauteur reçues, et configuré pour commander le fonctionnement de l'ensemble de jambes (6) de sorte que le dispositif d'assistance portable (A) soit espacé du sol lorsque le module de commande (2a) détermine que la hauteur de l'AARD (B) est réduite d'après la hauteur calculée.

12. Système de rééducation assistée selon la revendication 10 ou 11, comportant en outre un dispositif de commande auxiliaire (3') qui est formé sur un côté du cadre principal (4) et configuré pour ajuster un angle d'articulation de hanche entre l'ensemble de jambes (6) et le cadre principal (4), dans lequel le module de commande (2a) est configuré pour commander le dispositif de commande auxiliaire (3') de sorte qu'un premier angle de sol formé entre l'ensemble de jambes (6) et le sol soit réduit lorsque la hauteur de l'AARD (B) est réduite.

13. Système de rééducation assistée selon l'une quelconque des revendications 10 à 12, comprenant en outre un support de pied (7) prévu à une extrémité de l'ensemble de jambes (6), dans lequel le module de commande (2a) est configuré pour commander l'ensemble de jambes (6) de sorte qu'un second angle de sol formé entre une surface inférieure du support de pied (7) et le sol soit réduit lorsque la hauteur de l'AARD (B) est réduite.

14. Système de rééducation assistée selon l'une quelconque des revendications 10 à 13, dans lequel le module de communication (2c) est configuré pour recevoir le signal de mode en provenance de l'AARD (B), et le module de commande (2a) est configuré pour commander le fonctionnement de l'ensemble de jambes (6) d'après les informations de hauteur reçues, lorsque le signal de mode est activé,
dans lequel, le signal de mode est activé lorsque l'AARD (B) passe entre des états assis et debout.

15. Système de rééducation assistée selon l'une quelconque des revendications 10 à 14, dans lequel les informations de hauteur reçues sont générées dans un ensemble d'entraînement de l'AARD (B) qui est configuré pour ajuster la hauteur de l'AARD (B), et dans lequel le signal de mode reçu est généré par une pédale utilisée en tant qu'interrupteur de fonctionnement de l'ensemble d'entraînement.
